(19) Europäisches Patentamt
European Patent Office
Office européen des brevets

(11) EP 2 851 745 B1

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(51) Int Cl.:
***G02F 1/15*** *(2006.01)*

(21) Anmeldenummer: **14185785.4**

(22) Anmeldetag: **22.09.2014**

(54) **Elektrochrome Zellen und deren Verwendung**

Electrochromic cells and their use

Cellules électrochromes et leur utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2013 DE 102013110586**

(43) Veröffentlichungstag der Anmeldung:
**25.03.2015 Patentblatt 2015/13**

(73) Patentinhaber:
- **Fraunhofer-Gesellschaft zur Förderung der angewandten Forschung e.V.
80686 München (DE)**
- **Julius-Maximilians-Universität Würzburg
97070 Würzburg (DE)**

(72) Erfinder:
- **Sporn, Dieter
97082 Würzburg (DE)**
- **Lorrmann, Henning
97072 Würzburg (DE)**
- **Peter, Verena
97950 Schönheim (DE)**
- **Schott, Marco
97753 Karlstadt (DE)**

(74) Vertreter: **Strehl Schübel-Hopf & Partner
Maximilianstrasse 54
80538 München (DE)**

(56) Entgegenhaltungen:
**US-A1- 2009 270 589 US-A1- 2010 238 534
US-A1- 2012 307 341**

EP 2 851 745 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft eine elektrochrome Zelle mit einer Arbeitselektrode, die eine organische Komplexverbindung enthält, und einer auf diese Arbeitselektrode abgestimmten Gegenelektrode. Die elektrochrome Zelle kann ohne oder mit einer im Vergleich zu bisher geringeren Zahl an kostenintensiven Sputter-Schritten hergestellt werden, und sie lässt sich zwischen einer Farbe, die aus einer größeren Palette auswählbar ist, und farblos oder einer anderen Farbe schalten. Sie besitzt eine geringe Schaltspannung, einen guten Memory-Effekt und eine hohe Stabilität über viele Schaltzyklen hinweg, Je nach gewähltem Material für die Arbeitselektrode lässt sich außerdem eine deutlich verbesserte Einfärbe-Effizienz erzielen.

J.R. Platt, J. Chem. Phys. 1961, 34, 862 war der Erste, der das Phänomen des Elektrochromismus dokumentierte. C. G. Granqvist beschreibt in Nat. Mater. 5, 89-90 (2005) eine fünfschichtige elektrochrome Zelle, bestehend aus einer ersten, mit einem transparenten Leiter beschichtete Glasscheibe, auf die eine elektrochrome Schicht oder eine Schicht, die Ionen einlagern kann, aufgebracht ist. Über einen ionenleitenden Elektrolyten ist dieses Konstrukt mit einer zweiten, ebenfalls mit einem transparenten Leiter beschichteten und mit einer zweiten elektrochromen Schicht versehenen Glasscheibe verbunden. Die beiden transparenten Leitschichten sind in einen Schaltkreis integriert. Wird über diesen Schaltkreis der transparente Leiter der ersten Glasscheibe als Anode, der andere als Kathode geschaltet, wandern Ionen vom elektrochromen Film, der sich auf der ersten Glasscheibe befindet, durch den Elektrolyten zum elektrochromen Film der zweiten Glasscheibe.

Als Material für eine funktionell schaltbare Schicht für elektrochrome Fenster hat sich bislang in Produkten nur $WO_3$ etabliert. Das farblose $WO_3$ wird durch elektrochemische Reduktion und bei gleichzeitigem Einbau eines ladungsneutralisierenden Kations M (wie $H^+$, $Li^+$ oder $K^+$) blau gefärbt. Der Vorgang ist reversibel:

$$WO_3 + x \cdot e^- + x \cdot M^+ \leftrightarrow M_xWO_3$$

farblos blau

Weitere Übergangsmetalloxidverbindungen, die elektrochrome Effekte zeigen und in Prototypen schon zum Einsatz gekommen sind, sind z.B. $IrO_2$, $MnO_2$, $MoO_3$, NiO, $Nb_2O_5$. Vor allem $IrO_2$ und NiO sind zwei Kandidaten mit guten optischen und elektrochemischen Eigenschaften.

S. Heusing et al. beschreiben in Thin Solid Films 502, 240-245 (2006) elektrochrome Schichten, die mit der Sol-Gel-Technik hergestellt werden können. Damit ist es auch möglich, gebogene EC-Fenster herzustellen, was für die Anwendung im Automobilbereich (z.B. als Sonnendächer) von Bedeutung ist. A. Kraft et al. stellen in Solar Energy Materials and Solar Cells 90, 469-476 (2006) elektrochrome Gebäudeverglasungen vor, für die $WO_3$ und Preußisch Blau als elektrochrome Schichten für die Arbeits- und Gegenelektrode eingesetzt werden. Als Polymerelektrolyt dient dabei eine ionenleitende Polyvinylbutyralfolie.

R. Beatens et al. geben in Solar Energy Materials & Solar Cells 94, 87-105 (2010) eine Übersicht über die Eigenschaften, Anforderungen und Möglichkeiten intelligenter Fenster für dynamischen Tageslicht- und Solarenergie-Kontrolle in Gebäuden. Darin werden auch organische elektrochrome Polymermaterialien erwähnt wie Polyanilin und Poly(3,4-ethylen-dioxythiophen), sowie in jüngerer Zeit daraus entwickelte Abwandlungen dieser Materialien. Diese werden in der Regel als Gegenelektrode zu $WO_3$ eingesetzt.

In EP 2 444 839 A1 wird eine Display-Anordnung beschrieben, die als farbiges "elektronisches Papier" (sog. e-paper) eingesetzt werden kann. Zwischen zwei mit einer Oberflächenelektrode (z.B. ITO) beschichteten Substrat-Platten oder-Folien, deren eine transparent sein muss, wird eine strukturierte Arbeitselektrode aus einem Hybridpolymer mit Bis(terpyridin)-Resten, die Metallionen chelatisieren können, und neutralisierenden, meist organischen Anionen und ein Polymer-Gelelektrolyt eingebracht. Um einen hohen Kontrast zu erhalten, können weiße Partikel in den Gelelektrolyten eingebaut werden. Die ITO-Elektroden des transparenten Substrats dient nicht nur als leitfähiges Material, um den Stromfluss zur Arbeitselektrode zu ermöglichen, sondern auch als Gegenelektrode zur Arbeitselektrode. Eine ähnliche Vorrichtung offenbart EP 2 105 787 A. Hier kann das Papier schwarze, weiße und farbige Bereiche anzeigen. In US 2009/270589 A1 werden verschiedenste Terpyridin-Polyelektrolyte beschrieben, die leicht zwischen einem farbigen und einem farblosen Zustand hin- und hergeschaltet werden können und sich aufgrund ihrer Elektrochromie für lichtemittierende Vorrichtungen, energiekonvertierende Materialien, Medikamentenabgabesysteme, Sensoren, Hochleistungskatalysatoren, Solarbatterien und dergleichen eignen. Weitere, als elektrochromes Material einsetzbare Bis(terpyridin)-Chelatliganden sind aus WO 2008/081762 A1 und WO 2008/143324 A1 bekannt. Letztere Druckschrift offenbart organische Verbindungen, bei denen zwei Terpyridyl-Reste über einen Spacer kovalent miteinander verbunden sind und Übergangsmetallionen komplexieren können, zur Anwendung in elektronischen Papieren. Diese Verbindungen werden auch als "Hybridpolymer" bezeichnet.

Auch in WO 2011/096386 A1 werden derartige Terpyridin-Chelatliganden, ihre Herstellung sowie ihre Verwendung als elektrochromes Material für intelligente Fenster beschrieben. Hierfür wird eine Schicht, die das Hybridpolymer

enthält, zwischen zwei elektrisch leitfähigen Platten, z.B. ITO-beschichteten Glasplatten, angeordnet. Die Auftragung des Hybridpolymers erfolgt mittels Schleuderbeschichtung auf eine der beiden Platten. Der zu verwendende Elektrolyt wird z.B. als $LiClO_4$-Gel jeweils auf das Hybridpolymer und die andere ITO-Glas-Platte aufgetragen, und die beiden Glas-Platten werden mit den mit Elektrolyt beschichteten Seiten zueinander zusammengebracht. Als Stromlieferant wird u.a. eine Solarzelle vorgeschlagen. Da der Energieverbrauch des intelligenten Fensters sehr gering ist, soll es sich auch in Innenräumen oder bei indirekter Sonneneinstrahlung nutzen lassen. In Kombination mit einer zweiten Stromquelle kann die Solarzelle auch als Sensor dienen und das Einfärben des Fensters bei direkter Sonneneinstrahlung bzw. Entfärben bei bewölktem Himmel auslösen.

Es lässt sich allerdings zeigen, dass die in WO 2011/096386 vorgeschlagene Konstruktion keinerlei Schaltstabilität besitzt.

Es ist Aufgabe der Erfindung, hier Abhilfe zu schaffen und ein elektrochromes Fenster bereitzustellen, dessen Arbeitselektrode (Elektrode mit Farbumschlag) sich mithilfe gängiger Beschichtungs- oder Druckverfahren auf das transparente Substrat aufbringen lässt, wobei das Fenster eine hohe Schaltstabilität über eine sehr große Zyklenzahl (vorzugsweise mindestens 5000, stärker bevorzugt mindestens 10000 Zyklen) hinweg besitzen soll. Weiterhin ist es wünschenswert, das sich das Fenster mit schneller Geschwindigkeit schalten lässt, einen guten Memory-Effekt aufweist, eine hohe Einfärbeeffizienz (d.i. der Quotient aus der Änderung der optischen Dichte zu geflossener Ladung) besitzt bzw. eine hohe Transmissionsdifferenz zwischen an- und abgeschaltetem Zustand aufweist und eine geringe Schaltspannung benötigt. Die Lösung der Aufgabe liegt in der Bereitstellung einer elektrochromen Zelle, umfassend ein erstes Substrat und ein zweites, transparentes Substrat, die jeweils mit einer leitenden Beschichtung versehen sind, eine schichtförmige Arbeitselektrode, die in Kontakt mit der leitenden Beschichtung eines der beiden Substrate steht und eine Metall-Komplexverbindung aufweist, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht, und ein Elektrolytmaterial, das sich zwischen der Arbeitselektrode und dem anderen Substrat befindet und bewegliche Metallkationen, beispielsweise in Form eines dissoziierbaren Metallsalzes, enthält, wobei sich zwischen dem Elektrolytmaterial und der leitenden Beschichtung des anderen Substrats eine zweite Elektrode befindet, die in der Lage ist, bewegliche Metallkationen des Elektrolytmaterials zu interkalieren und/oder eine Redoxreaktion einzugehen, wobei das Material der zweiten Elektrode beim Übergang vom oxidierten in den reduzierten Zustand keiner Farbvertiefung im Wellenlängenbereich der Farbvertiefung der Metall-Komplexverbindung und vorzugsweise gar keiner Farbvertiefung unterliegt und eine Ladungskapazität besitzt, die mindestens der Ladungskapazität der Arbeitselektrode entspricht. In einer bevorzugten Ausführungsform unterliegt das Material der zweiten Elektrode einer Farbvertiefung beim Übergang vom reduzierten in den oxidierten Zustand. Damit addieren sich beim An- und Abschalten der Zelle die Farbvertiefungen beider Elektroden.

In einer ebenfalls bevorzugten Ausführungsform, die sich mit allen anderen Ausführungsformen dieser Erfindung kombinieren lässt, ist auch das zweite Substrat transparent. Die Zelle kann dann z.B. als elektrochromes Fenster genutzt werden.

Der erfindungsgemäße Zellaufbau ist zusammen mit der Verschaltung in Figur 1 schematisch vor und nach dem Zusammenfügen dargestellt.

Als Substrate für die erfindungsgemäßen elektrochromen Zellen können starre oder flexible, jeweils nach Bedarf lichtdurchlässige Scheiben oder Folien dienen, beispielsweise transparente, farblose oder ggf. auch gefärbte Gläser oder Polymer-Folien, beispielsweise aus Polyethylenterephthalat (PET) oder Acryl ("Acrylglas").

Die Substrate sind mit einer gängigen transparenten, leitfähigen Beschichtung versehen, beispielsweise einem Oxid wie ITO ($In_2O_3$:$SnO_2$), FTO ($SnO_2$:F), ATO ($SnO_2$:Sb) oder AZO (ZnOAl). Diese kann z.B. durch Sputtern aufgebracht sein (das gilt vor allem für ITO und FTO; AZO lässt sich aber beispielsweise auch durch Sol-Gel-Technik als dünne Schicht auf dem Glassubstrat abscheiden). Die Dicke der Schichten ist nicht kritisch und liegt für ITO üblicherweise bei 130 nm, für FTO üblicherweise bei 300 nm. Teilweise sind derart beschichtete Substrate im Handel erhältlich. Die transparente leitfähige Schicht dient zur Stromversorgung (als Ableiter) der beiden Elektroden; jede von ihnen wird an eine Spannungsquelle in einem Stromkreis angeschlossen.

Auf das eine der beiden beschichteten Substrate wird eine Lösung der für die Arbeitselektrode vorgesehenen Metall-Komplexverbindung aufgebracht, vorzugsweise eine Lösung in Wasser, einem Alkohol wie Methanol oder Ethanol oder einem wässrigen, alkoholhaltigen Medium. Hierfür können unterschiedliche nasschemische Beschichtungsverfahren eingesetzt werden, je nach Bedarf und Substratbeschaffenheit zum Beispiel:

- Tauchbeschichtung (dip-coating)
- Schleuderbeschichtung (spin-coating)
- Drop-coating
- Rakeln
- Sprühbeschichtung
- Fluten

- Roller-coating
- Tampondruck
- Layer-by-Layer-Verfahren

Je nach Konzentration der Lösung kann die Schichtdicke variieren. Bevorzugt sind Konzentrationen im Bereich von 10 bis 45 mM, insbesondere von 20 bis 40 mM; die Schichtdicke wird hierbei in der Regel im Bereich von etwa 5 bis 1000 nm, vorzugsweise von etwa 100 bis etwa 700 nm variiert.

Auf die als Arbeitselektrode dienende Schicht wird die Elektrolytschicht aufgetragen.

Auf die leitende Beschichtung der zweiten Substratplatte wird zunächst das Material der zweiten Elektrode schichtförmig aufgetragen. Bei Bedarf kann hierauf eine weitere Elektrolytschicht aufgebracht werden. Schließlich werden die beiden Substratplatten so zueinander orientiert, dass die Elektrolyt-/ Elektrodenschichten zueinander zeigen, aufeinander aufgelegt und miteinander verbunden. Dieser Randbereich wird anschließend luftdicht verklebt (z.B. mit PUR- oder Epoxid-Kleber). Alternativ kann die Abdichtung mit Hilfe einer flexiblen Kunststoff-Dichtung, einer Butylgummischnur, einem Rahmen oder dergleichen bewerkstelligt werden.

Eine Vielzahl von Komplexverbindungen mit verschiedenen Übergangsmetallionen eignet sich als erfindungsgemäß einsetzbare Metall-Komplexverbindung, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht, die also die wünschenswerten elektrochromen Eigenschaften aufweist. In günstiger Weise handelt es sich dabei um Verbindungen mit chelatisierenden Komplexliganden, die Metallatome z.B. über zwei oder mehr Stickstoff-, Sauerstoff- oder Schwefelatome binden können. Besonders bevorzugt ist die Verwendung von Liganden, die zwei oder, vorzugsweise, drei bindungsfähige Stickstoffatome mit verfügbarem Elektronenpaar enthalten, beispielsweise eingebunden in entsprechende aromatische Heteroringe wie Pyridin, Pyrimidin, Indolizin, Imidazol, Pyrazol, Oxazol, Isoxazol, Thiazol oder Isothiazol sowie deren Benzokondensate wie Benzimidazol oder Benzoxazol. Diese können beliebig kombiniert werden, beispielsweise zu den Liganden Bis-(benzimidazolyl)pyridin, Bis-(benzoxazolyl)pyridin, in denen u.a. der Pyridin-Rest entweder unsubstituiert bleibt oder beliebig, z.B. mit OH oder Halogen, substituiert sein kann, oder zu einem optional, z.B. mit Halogen, Alkyl oder Aminophenyl, substituierten Terpyridin. Über die Variabilität dieser Liganden lässt sich eine breite Farbpalette erhalten. Die prinzipiell komplexierbaren Metallkationen sind in der Regel Übergangsmetallkationen, sie werden für die vorliegende Erfindung vorteilhaft in Hinblick auf ihr Redoxpotential ausgewählt, wie weiter unten genauer dargestellt.

Beispiele für Metallkomplexe mit dem Chelatliganden Bis(benzimidazol-2-yl)pyridin-Rest sind Fe-(2,6-Bis(benzimidazol-2-yl)-pyridin)$_2$ (bbip (X=H)) und Fe-(2,6-Bis(benzimidazol-2-yl)-4-hydroxypyridin)$_2$ (bbip (X=OH)), Beispiele für Metallakomplexe mit Terpyridyl-Liganden sind Fe-(4'-chloro-2,2':6',2"-terpyridin)$_2$ und Fe-(4'-(4-aminophenyl)-2,2':6',2"-terpyridin)$_2$:

| | |
|---|---|
| bbip (X=H) | 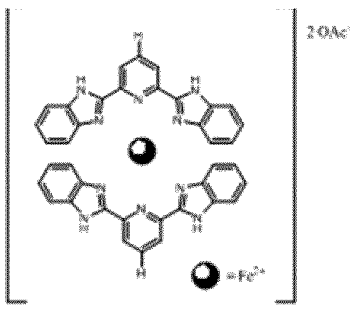 Fe-(2,6-Bis(benzimidazol-2-yl)-pyridin)$_2$ |
| bbip (X=OH) | 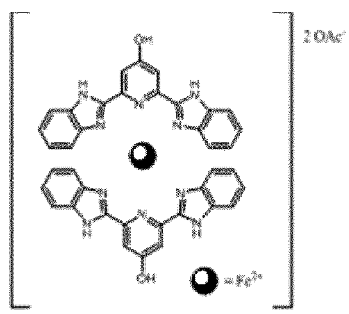 Fe- (2,6-Bis(benzimidazol-2-yl)-4-hydroxypyridin)$_2$ |

(fortgesetzt)

| | |
|---|---|
| tpy-Cl | 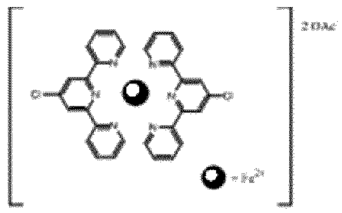 Fe-(4'-chloro-2,2':6',2"-terpyrin)$_2$ |
| tpy-ph-$NH_2$ | 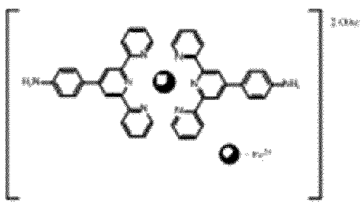 Fe-(4'-(4-aminophenyl)-2,2':6',2"-terpyridin)$_2$ |

In einer spezifischen Ausführungsform kann der Komplexligand zwei Terpyridylgruppen aufweisen, die über eine Einfachbindung oder einen Spacer miteinander verbunden sind. Der

Vorteil dieser Liganden liegt darin, dass sie beidseitig Metallatome komplexieren können, wobei die Metallatome ihrerseits von zwei Terpyridyl-Gruppen umgeben sein können, sodass eine Art Kettenpolymer entsteht. Solche Terpyridin-Liganden sind aus der Literatur bekannt (siehe z.B. US 2009/0270589, EP 2 444 839 A1 oder WO 2008/143324 A1); sie können polymerartige Koordinationsverbindungen mit den oben erwähnten Metallionen, insbesondere mit Fe, Co, Ni, Zn oder Ru eingehen, wie anhand des nachstehenden Terpyridin-Komplexes gezeigt:

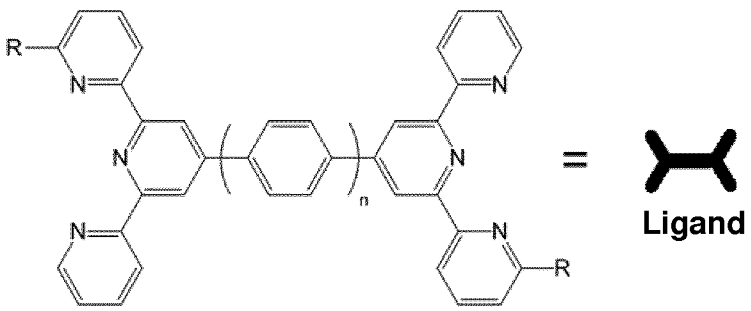


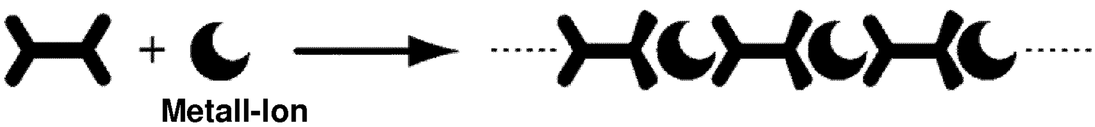


Die Gruppe dieser Komplexe ist unter dem Namen MEPE bekannt. Die MEPEs sind in wässrigen und alkoholischen Medien löslich und luft- und hydrolysestabil. Durch geeignete Auswahl an Liganden und Metall-Ionen lassen sich die optischen und elektrochemischen Eigenschaften variieren. Die Einfärbeeffizienz liegt im Fall von Fe-MEPE (35 mmolar in Ethanol und bei einer Schichtdicke von ca. 400 nm) bei über 150 $cm^2/C$ und ist somit deutlich höher als bei den bisher verwendeten Materialien, wie $WO_3$ (~ 50 $cm^2/C$) oder Preußisch Blau (~ 30 $cm^2/C$). Die Einfärbeeffizienz, also die Differenz zwischen der Absorption im reduzierten und der Absorption im oxidierten Zustand des entsprechenden Materials in Abhängigkeit von der für die Farbänderung benötigten Ladung, ist ein quantitatives Maß für die elektrochemisch hervorgerufene Farbe. Sie wird definiert durch den Quotient des Logarithmus der Änderung der optischen Dichte zur benötigten Ladung. Sie wird jeweils für eine spezielle Wellenlänge angegeben und lässt sich durch die nachstehende Formel (1) darstellen,

$$E = \frac{\log\left(\frac{\tau_{ch}}{\tau_{dis}}\right)}{C_{ch}} \quad (1)$$

worin $\tau_{ch}$ die Transparenz im geladenen Zustand, $\tau_{dis}$ die Transparenz im ungeladenen Zustand und $C_{ch}$ die für die Farbänderung benötigte Ladung bedeuten. Aus der Formel geht hervor, dass die Farbeffizienz ein Parameter ist, der als solcher unabhängig von der Schichtdicke definiert ist, über die für die Farbänderung benötigte Ladungsmenge jedoch mit der Dicke der Schicht verknüpft ist.

Die Metall-Komplexverbindung der Arbeitselektrode kann einen oder mehrere chelatisierende Komplexliganden aufweisen.

Für die Auswahl von erfindungsgemäß geeigneten Metallkationen ist zu beachten, dass diese formal in mindestens zwei Oxidationsstufen existieren können müssen, wobei sich die optischen Eigenschaften der Komplexe (d.h. vor allem die Intensität der Charge-Transfer-Banden) abhängig von der jeweiligen Oxidationsstufe unterscheiden müssen. Um energieeffiziente elektrochrome Fenster herstellen zu können, sollte die Zellspannung vorzugsweise im Bereich von 0.1 - 3 V, stärker bevorzugt im Bereich von 0,1 - 1,6 V liegen. Erfindungsgemäß können Komplexe eines oder mehrerer Übergangsmetallkationen, ausgewählt unter Cr, Mn, Fe, Co, Ni, Cu, Mo, Ru, Rh, Pd, eingesetzt werden, wobei Mn, Fe und Co zu bevorzugen sind, darunter ganz besonders Fe. Fe ist deshalb besonders bevorzugt, weil es sich durch ein gutes Schaltpotential und einen hohen Farbkontrast auszeichnet und eisenhaltige Komplexe der vorgenannten Art eine besonders hohe Schaltstabilität aufweisen.

Es können je nach Bedarf ein einzelner Komplexligand in Kombination mit einer einzelnen Art Metallkation, ein einzelner Komplexligand mit zwei oder mehr Metallkationen-Arten, eine Mischung von zwei oder mehr Komplexliganden mit nur einer Art Metallkation sowie eine Mischung von zwei oder mehr Komplexliganden mit einer Mischung von zwei oder mehr Metallkationen-Arten eingesetzt werden. Eisen als Metallion in Kombination mit einer Mischung aus zwei oder mehr verschiedenen chelatisierenden Komplexliganden ist bevorzugt, wobei die Komplexliganden besonders bevorzugt jeweils mindestens einen aromatischen Heteroring aufweisen. Hierdurch lässt sich eine nochmals gesteigerte hohe Variabilität an Farben und Farbtönungen, darunter auch grau oder braun, sowie eine hohe Variabilität der möglichen Schaltpotentiale erreichen.

Um ein möglichst breites reversibel schaltbares Absorptionsmaximum zu erreichen, können mehrere Komplexe, deren Maxima der Ladungsübertragungs-Banden für den Elektronenübergang von Metall auf Ligand ("metal-to-ligand charge-transfer", MLCT-Banden) bei geringfügig unterschiedlichen Wellenlängen liegen, gemischt werden. Die nachstehenden Beispiele geben hierfür eine Mischung aus vier verschiedenen Komplexen an; es lassen sich jedoch beliebig andere Mischungen verwenden.

Die Schaltbarkeit bei ähnlichem Redoxpotential solcher Mischungen wird dadurch erreicht, dass ein Metallkation, z.B. $Fe^{2+}$, stets in ähnlicher, aber nicht identischer koordinativer Umgebung vorliegt (z.B. verzerrt oktaedrisch von 6 Stickstoff-Atomen umgeben). Umgekehrt kann bei der Verwendung verschiedener Metallkationen ein ähnliches Redoxpotential durch die Komplexbildung der verschiedenen Kationen mit (nur) einem geeigneten Liganden erreicht werden. Die Farbe des Komplexes hängt vom verwendeten Metallkation und vom Liganden ab. Einen entscheidenden Einfluss auf die Farbigkeit der Metall-Komplexe üben außerdem Substituenten an den Liganden aus. Der Einfluss beruht auf den elektronenziehenden

bzw. -schiebenden Effekten der Substituenten. Die Lage der Absorptions-Bande zeigt den Trend, dass eine stärkere bathochrome Verschiebung der Bande auftritt, je geringer die Elektronendichte am Donoratom ist.

Um eine Schaltung der elektrochromen Zellen von vorbestimmten Farben nach farblos zu erzeugen, können entweder Komplexe aus einer spezifischen Metall-Ligand-Kombination eingesetzt werden, oder es können Mischkomplexe, z.B. aus verschiedenen Metallen mit einem Liganden, oder aus verschiedenen Metallen und verschiedenen Liganden, oder aus einem Metall und verschiedenen Liganden, eingesetzt werden. Insbesondere für die Schaltung von grau nach farblos, der wegen des Empfindens dieses Farbtons als unaufdringlich besondere Wertschätzung entgegengebracht wird, werden gezielt Mischungen von farbigen Metallkomplexen eingesetzt, die nach der Farblehre bei Addition einen Grauton ergeben. Alle Komplexverbindungen sollten dafür bei etwa der gleichen Spannung reversibel oxidativ entfärbt werden können. Hierfür kann man z.B. Eisen mit den vier Einzelkomplexen bbip_OH (rotbraun), tpy-Cl (pink), tpy-ph-NH2 (violett), bbip_H (hellblau) mischen, wobei sich ein Molverhältnis von der vier Chelatliganden von 5:2:2:2 und Ethanol als Lösungsmittel als besonders günstig herausgestellt hat. Durch die Kombination eines oder mehrerer Metalle und eines oder mehrerer Liganden kann man aber auch unterschiedliche Farben erzeugen. Somit lässt sich die Farbpalette erweitern und ein breiter Absorptionsbereich erzielen. Durch Mischen ist letztlich jeder Farbton erreichbar.

Die zweite Elektrode, die als Gegenelektrode zur Arbeitselektrode geschaltet wird, soll in der Lage sein, Kationen des dissoziierbaren Metallsalzes zu interkalieren und/oder eine Redoxreaktion einzugehen. Zwar sind auch leitende Beschichtungen wie ITO oder dergleichen bis zu einem gewissen Grade in der Lage, Lithiumionen zu interkalieren; die

Erfinder mussten jedoch zu ihrer Überraschung feststellen, dass bei Verwendung einer Arbeitselektrode, die komplexierte, einer Redoxreaktion zugängliche Metall-Kationen enthält, erst die Einbeziehung einer zweiten, separaten Elektrodenschicht mit diesen Eigenschaften eine über zehntausend Zyklen stabile Schaltbarkeit der elektrochromen Zelle ermöglicht, während bei Fehlen dieser Elektrode irreversible Prozesse an der leitenden Beschichtung des zweiten Substrats beobachtet wurden. Sorgfältige und systematische Untersuchungen, die weiter unten näher dargestellt sind, zeigten dann, dass die üblicherweise für die leitende Beschichtung verwendeten transparenten Oxide wie ITO, FTO in Kombination mit der erfindungsgemäß eingesetzten Arbeitselektrode nicht nur beim Schalten irreversiblen Prozessen unterliegen, sondern auch eine ungenügende Aufnahmekapazität für die geforderte Ladungsmenge besitzen, weil die elektrochemische Doppelschicht, die in diesem System ausgebildet wird, die erforderliche Ladungsmenge nicht speichern kann, mit anderen Worten, dass bei Verwendung der genannten Arbeitselektrode eine zusätzliche Ionenspeicherschicht erforderlich ist.

Das Material dieser Elektrode soll darüber hinaus beim Übergang vom oxidierten in den reduzierten Zustand keiner Farbvertiefung im Wellenlängenbereich der Farbvertiefung der Metall-Komplexverbindung und vorzugsweise gar keiner Farbvertiefung unterliegen. Der Grund hierfür liegt darin, dass eine Farbvertiefung, die mit dem Übergang vom oxidierten in den reduzierten Zustand einherginge, den Effekt der Farbdifferenz (den "Farbhub") zwischen an- und ausgeschaltetem elektrochromem Fenster vermindern würde. Zwar kann unter Umständen auch eine elektrochrome Zelle von Interesse sein, die einen Farbwechsel zeigt, weshalb eine Farbvertiefung in einem anderen als dem Wellenlängenbereich der Farbvertiefung der Metall-Komplexverbindung(en) unter Umständen durchaus tolerabel oder sogar wünschenswert sein kann; für die häufigsten Anwendungen, insbesondere im Falle von elektrochromen Fenstern, wird man jedoch eine elektrochrome Zelle benötigen, die zwischen einer Farbe bzw. grau und einem möglichst transparenten und farblosen Zustand geschaltet werden kann, bei der also eine deutliche Farbabschwächung wahrgenommen werden kann.

Aufgrund der Vielzahl von zur Verfügung stehenden Interkalations- und Redoxmaterialien ist der Fachmann in der Wahl des Materials für die zweite Elektrode dem Grunde nach erst einmal nicht beschränkt. Soll jedoch ein Schaltwechsel mit einer deutlichen Farbabschwächung möglich sein, sind verschiedene Überlegungen von Bedeutung. So darf die zweite Elektrode entweder eine nur sehr geringe und vorzugsweise gar keine Färbeeffizienz aufweisen, oder sie muss komplementär zur Arbeitselektrode ihre Farbe wechseln, sodass sich sogar ein verstärkender Farbeffekt ergibt. Wechselt beispielsweise die Arbeitselektrode bei einer Oxidation von Fe(II)-MEPE nach Fe(III)-MEPE die Farbe von blau (reduziert) nach farblos (oxidiert), muss die zweite Gegenelektrode so ausgewählt werden, dass sie kaum eine Farbänderung durchläuft, während das in ihr enthaltene Material reduziert wird, oder aber dass dieses durch die Reduktion eine ebenfalls blaue Farbe erhält.

Wie zuvor erwähnt, muss das Material der zweiten Elektrode entweder in der Lage sein, Kationen des Elektrolytmaterials einzulagern, oder es muss einer Redoxreaktion unterworfen werden können. Unter dem ersteren Aspekt können beispielsweise solche Materialien für die zweite Elektrode eingesetzt werden, die als Lithium-Interkalationselektroden in Lithium-Akkumulatoren bekannt sind, sofern sie ein geeignetes Normalpotential aufweisen

Da MEPE reduziert vorliegt und kathodisch einfärbt, muss die Gegenelektrode zwingend oxidiert vorliegen und anodisch einfärben. Das Potential der Gegenelektrode muss daher kleiner als das der Hauptelektrode sein. Die benötigte Energie hängt von der Zellspannung ab und sollte möglichst gering (etwa 1 V) sein.

Hier bietet sich beispielsweise die Verwendung von Lithiumtitanat ($Ti_{1-y}V_yO_x$) und insbesondere $TiV_2O_7$ an. Dieses Material kann im eingeschalteten Zustand der elektrochromen Zelle Lithiumionen interkalieren; dabei wird $V^{5+}$ partiell zu $V^{4+}$ reduziert, bei der Rückreaktion entsteht wieder $V^{5+}$. Gesputterte Lithiumtitanat-Schichten sind kommerziell erhältlich, so dass der Einsatz dieses Materials unaufwändig gestaltet werden kann.

Ein zweites Beispiel nutzt ein Material, das selbst einer Redoxreaktion zugänglich ist, nämlich Preußisch Blau. Die Reduktion dieses Material lässt sich mit der nachstehenden Reaktionsgleichung darstellen:

$$MFe[Fe(CN)_6] \text{ (blau) zu } M_2Fe[Fe(CN)_6] \text{ (ungefärbt)}$$

M ist dabei ein Alkali-Ion wie z.B. Kalium.

Anstelle von Preußisch Blau lassen sich natürlich auch Derivate davon einsetzen, in denen vor allem die zweiwertigen Eisenkationen durch andere (Übergangs-)Metallzentren wie Co, Ni, Cu etc. ersetzt sind.

Des Weiteren muss die Gegenelektrode eine an die Ladungskapazität der Arbeitselektrode angeglichene Ladungskapazität aufweisen. Das lässt sich durch die Schichtdicke der Gegenelektrode regulieren. Ist die Gegenelektrode aus einem Material hergestellt, das keine Farbänderung bei Redoxreaktionen zeigt bzw. nur eine sehr geringe Färbeeffizienz aufweist, kann die Schichtdicke in jedem Fall problemlos so gewählt werden, dass die Ladungskapazität der Gegenelektroden-Schicht der Ladungskapazität der Arbeitselektroden-Schicht entspricht oder größer dimensioniert ist. Denn weil auch hohe Schichtdicken "unsichtbar" sind, kann die auf die Fläche bezogene Ladung dem Grunde nach beliebig groß gemacht werden. Damit kann auch ein Material mit einer sehr geringen spezifischen Ladungskapazität, verglichen mit der Ladungskapazität der Arbeitselektrode, als zweite Elektrode eingesetzt werden, So wird sichergestellt,

dass die Arbeitselektrode stets vollständig ge- und entladen werden kann. Im oxidierten Zustand stark gefärbte Materialien für die zweite Elektrode würde man dagegen nur in geringen Schichtdicken einsetzen; sofern sie jedoch eine hohe spezifische Ladungskapazität aufweisen, die ausreicht, um die gesamte Ladung der Arbeitselektrode aufnehmen zu können, sind sie ebenfalls geeignet.

Preußisch Blau ist ein besonders bevorzugtes Material für die Gegenelektrode, insbesondere, wenn die Arbeitselektrode einen Eisen-Terpyridyl-Komplex aufweist. Durch eine elektrophoretische Beschichtung kann die Ladungsdichte dieser Schicht in einfacher Weise genau auf die der korrespondierenden Arbeitselektrode angepasst werden. Preußisch Blau schaltet dabei exakt komplementär zum Fe-MEPE von blau im oxidierten Zustand zu transparent im reduzierten Zustand, so dass die Arbeitselektrode und die Gegenelektrode zeitgleich von blau nach farblos (bzw. von farblos nach blau) schalten und sich der Farbeffekt dabei verstärkt. Ein weiterer Vorteil von Preußisch Blau ist die geringere Färbeeffizienz der Schicht, verglichen mit derjenigen von Fe-MEPE bei aufeinander angepasster Ladungskapazität: Sie beträgt nur etwa ein Fünftel der Effizienz von Metall-MEPE-Komplexen (bezogen auf die visuelle Empfindlichkeit des menschlichen Auges, vgl. DIN E410). Deshalb ist es ohne weiteres möglich, die Ladung dieser Schicht um etwa 10% größer zu dimensionieren als die der MEPE-Schicht. Dadurch kann gewährleistet werden, dass die MEPE-Elektrode mit dem starken Absorptionshub stets voll entladen werden kann. Bei einer Restladung von 10% ist auf der Preußisch Blau-Seite kein Farbstich zu erkennen, so dass die ganze Elektrode transparent ist. Die Ladekurven und ein Extinktionsspektrum sind in **Figur 6a/b** dargestellt.

Auch leitfähige Polymere wie z.B. Polypyrrole, Polythiophene, PEDOT-Systeme (PEDOT steht für Poly-3,4-ethylendioxythiophen) oder Polyaniline können als Materialien der zweiten Elektrode eingesetzt werden. Leitfähige Polymere zeigen auch vielfältige elektrochrome Eigenschaften (siehe Mortimer, R. J. Electrochromic Materials. Annu. Rev. Mater. Res. 41, 241-268 (2011)) und lassen sich je nach Polymer in den unterschiedlichsten Farben (Ox. und Red.) schalten. Auch hier gelten die gleichen Anforderungen, dass das Polymer anodisch einfärben muss und die Schaltspannung nicht größer als die der Arbeitselektrode sein darf.

Als Elektrolyte kommen transparente, flüssige, feste oder gelförmige Verbindungen, wie herkömmliche Batterieelektrolyte auf Basis organischer Carbonate (z.B. Ethylencarbonat (EC), Diethylcarbonat (DEC), Ethylmethylcarbonat (EMC), Propylencarbonat (PC)) Polyethylenoxiden (Molmassen zwischen 200 bis 20.000) oder Gemische daraus, PMMA/PC-Gemische oder verschiedene Polyacrylate mit einem Leitsalz in Frage. Das Leitsalz enthält leichtbewegliche Kationen sowie Anionen, die einerseits einen hohen Dissoziationsgrad aufweisen, d.h. vorzugsweise Anionen einer starken Säure sind, die andererseits aber auch mit der Metall-Komplexverbindung kompatibel sind - im oxidativen Schritt an der Arbeitselektrode, d.h. bei Anlegen einer Spannung, müssen Anionen eine ionische Bindung aufbauen, um einen Ladungsausgleich gegenüber den in den oxidierten Zustand gewechselten Metallionen bereitzustellen. Es ist weiterhin günstig, wenn sie in der Lage sind, in das Material der zweiten Elektrode, sofern diese vorhanden ist, zu interkalieren. Typische Salze sind Salze des Lithiums wie $LiClO_4$, $LiPF_6$ und $LiBF_4$. Dagegen sollte eine Interkalation der Anionen möglichst vermieden werden, da dies schon beim ersten Rücklauf irreversible Veränderungen bewirkt; vielmehr dürfen die Anionen nur ionische Verbindungen mit Metallionen dieser Schicht eingehen, die reversibel sind. Hier hat sich beispielsweise das Perchlorat-Anion als günstig erwiesen, während beispielsweise das Tetrafluoroborat-Anion in eine MEPE-Schicht in unerwünschter Weise interkalieren kann, wie anhand eines Versuchs mit Tetraethylammonium-tetrafluoroborat ($TEABF_4$) festgestellt werden musste.

Polymere wie z.B. PMMA können als Verdickungsmittel und damit zur Elektrolytstabilisierung und -verfestigung eingesetzt werden.

Ionische Flüssigkeiten können ebenfalls als Elektrolyte eingesetzt werden. Durch ihre mechanische Festigkeit sind diese für die Anwendung in Fassadenverglasungen oder in Automobilfenstern sogar von Vorteil. Zusätzlich sorgen sie in der Zelle für eine Fixierung der die Metall-Komplexverbindung enthaltenden Schicht. Dies verbessert die Lebensdauer, was sich insbesondere unter schroffen Bedingungen (Hitze, Vibrationen) bemerkbar macht.

Die Schaltgeschwindigkeiten der erfindungsgemäßen elektrochromen Zellen sind überraschend hoch: Sie liegen bei einer Fläche der Zellen von ca. 10 x 10 $cm^2$ im Bereich von wenigen Sekunden. Mit zunehmender Größe der Zellen nehmen sie natürlich zu. Hier ist das gewählte System mit hoher Färbeeffizienz im Vorteil, da in gleicher Zeit eine geringere Ladungszahl (= Strom) übertragen und der Spannungsabfall so vermindert werden kann.

Die erfindungsgemäßen Zellen besitzen einen sehr hohen Memory-Effekt, d.h., dass sich die Zelle nach einmaligem Anlegen einer Spannung, die die Schaltung bewirkt, nicht entladen. Dies hat zur Folge, dass lediglich beim Schaltvorgang Strom verbraucht wird. Vorteilhaft sind auch die niedrigen Schaltspannungen von wenigen Volt und die kurzen, von der Fläche abhängigen Schaltzeiten.

Die Einfärbeeffizienz kann sehr hoch sein und liegt im Fall von Fe-MEPE deutlich über 150 $cm^2/C$.

Eine weitere Besonderheit der Systeme sind deren hohe Temperatur- und Zyklenstabilität der Systeme. Die Fe-MEPE-Schichten sind bis 100°C stabil **(Fig. 10).** Diese Temperatur ist ausreichend für Verglasungen.

Ein wesentlicher Anwendungsbereich für die elektrochromen Zellen ist der Einsatz in Gebäudeverglasungen und Fenstern, deren Lichtdurchlässigkeit und Farbe je nach Sonneneinstrahlung verändert werden können. Dies kann zu beträchtlichen Energieeinsparungen führen. Im Sommer lässt sich der Energiebedarf zum Kühlen und im Winter

Heizenergie verringern. Auch ein höherer Komfort durch eine bessere Tageslichtausleuchtung von Räumen ist dadurch gewährleistet.

Ein weiteres Anwendungsgebiet findet sich im Bereich Fahrgasttransport z.B. in Automobilen, Zügen oder Flugzeuge. Hier kann neben der Reduzierung der Sonneneinstrahlung eine Verbesserung der Privatsphäre erreicht werden.

Möglich ist auch ein Einsatz in Displays und sogenannten "E-Papieren" oder "Electronic Paper". Hierfür muss nur eines der beiden Substrate lichtdurchlässig sein. Von Vorteil auf diesem Einsatzgebiet sind vor allem die Flexibilität und die Energieeinsparung während des Betriebs der elektrochromen Zellen.

Nachstehend soll die Erfindung anhand von Beispielen und Vergleichsversuchen näher erläutert werden.

A) Beispiele für die Herstellung von Metall-Komplexverbindungen

Ia) Synthese des Liganden Bis-(benzimidazolyl)pyridin (bbip_H) (X = H):

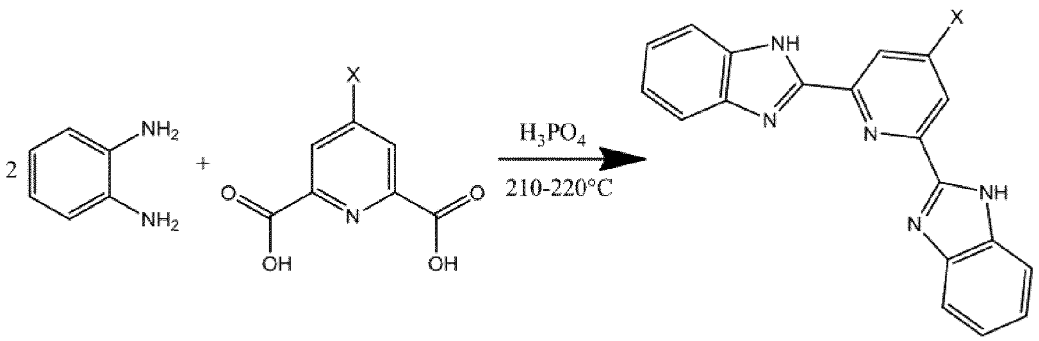


Pyridin-2,6-dicarbonsäure (13,4 g; 80,2 mmol) und Phenylendiamin (18,8 g; 17,3 mmol) werden in 85%-iger Phosphorsäure gelöst und für 6 h bei 180°C unter Rückfluss erhitzt. Die resultierende blaue Schmelze wird in 3 l Eiswasser gelöst, woraufhin sich ein weißer Niederschlag bildet. Dieser wird in heiße, 10%ige Natriumcarbonat-Lösung gelöst, welcher sich von violett über grau verfärbt. Der Niederschlag wird anschließend abfiltriert und der Rückstand für 12 h bei 100°C getrocknet. Der Feststoff wird mit 1 l Methanol umkristallisiert. Das Filtrat wird mittels Rotationsverdampfer eingeengt, woraufhin sich über Nacht farblose Kristalle bilden, die daraufhin abfiltriert und anschließend bei 120°C getrocknet werden. Ausbeute: 10,86 g (34,88 mmol) eines weißen, kristallinen Feststoffs (44%)

$^1$H-NMR (d6-DMSO, 400 MHz): $\delta$ 8,31 (d, J = 8,0 Hz, 2H), 8,13 (m, J = 7,6 Hz, 1 H), 7,73 (m, 4H), 7,30 (m, 4H) ppm.

Ib) Synthese des Fe-bis-(benzimidazolyl)pyridin (Fe-bbip_H)$_2$

Der Ligand (siehe I) wird in 75%-iger Essigsäure gelöst. Anschließend wird die Reaktionslösung für 20 min mittels Argon entgast. In einem weiteren Kolben werden 100 ml 100%-ige Essigsäure entgast und anschließend unter Argonstrom 133,33 mg Eisenpulver zugefügt. Das Reaktionsgemisch wird unter Rückfluss erhitzt, solange bis sich das Eisenpulver vollständig gelöst hat (2-3 h). Anschließend gibt man das Fe-Acetat zu der essigsauren Ligand-Lösung, lässt das Ganze über Nacht rühren und entfernt daraufhin das Lösungsmittel mittels Gefriertrocknung.

IIa+b) Synthese des Liganden bbip X=OH + Synthese Eisenkomplex

Chelidamsäure (5 g; 27,29 mmol) und o-Phenylendiamin (6,35 g; 58,69 mmol) werden in 85%-iger Phosphorsäure (50 ml) gelöst und anschließend bei 180°C für 6 h unter Reflux erhitzt. Nach dem Abkühlen wird die Schmelze in kaltes Wasser (11) überführt, woraufhin ein weißer Feststoff ausfällt. Dieser durch Filtration gewonnene Bodensatz wird in heiße, 10%-ige Natriumcarbonat-Lösung (300 ml) eingerührt, wobei sich die Flüssigkeit von weiß nach rosa verfärbt. Nach erneuter Filtration wird der Rückstand für 12 h bei 100°C getrocknet. Der Feststoff wird in heißem, mit Natriumcarbonat gesättigtem Methanol (10 ml) gelöst und mit destilliertem Wasser auf 100 ml aufgefüllt, Anschließend wird der pH-Wert mit 15%-iger Salzsäure auf 1 gebracht. Die Säure wird langsam hinzugegeben, da sich bei bei diesem Schritt große Mengen an weißem Schaum bilden. Der weiße Feststoff wird abfiltriert und mit kochendem Methanol (300 ml) gewaschen. Das Filtrat wird auf etwa die halbe Menge eingeengt. Über Nacht bilden sich farblose Kristalle, welche abfiltriert werden und mit Methanol und Diethylether gewaschen und bei 120°C im Trockenschrank getrocknet. Ausbeute: 1,68 g (5,13 mmol) eines weißen, faserigen Feststoffes (19%)

$^1$H-NMR ($C_2D_5OD$): $\delta$ 7.36 (s, Pyridinring), 7.30-7.15; 6.86-6.82 (m, Benzenering)

IIIa+b) Synthese des Liganden Bis-(benzthiazolyl)pyridine + Synthese Eisenkomplex

Pyridin-2,6-dicarbonsäure (3 g; 18 mmol) Aminothiophenol (4,50 g; 36 mmol) werden in 85%-iger Phosphorsäure (100 ml) gelöst. Die Mischung wird bei 180°C für 6 h unter Reflux gerührt. Nach dem Abkühlen wird die gelbbraune Schmelze in kaltes Wasser (620 ml) überführt, woraufhin weiße Flocken ausfallen. Der abfiltrierte Feststoff wird in heiße, 10%-ige Natriumcarbonat-Lösung eingerührt. Die Flüssigkeit verfärbt sich leicht bräunlich. Nach erneuter Filtration wird der Rückstand für 12 h bei 100°C getrocknet. Der weiße Feststoff wird heiß mit kochendem Methanol (300 ml) abfiltriert. Anschließend wird das Lösungsmittel auf die Hälfte abrotiert. Über Nacht bilden sich farblose Kristalle, welche abfiltriert und mit Methanol und Diethylether gewaschen werden. Daraufhin werden bei 120°C im Trockenschrank getrocknet. Ausbeute: 1,16 g (3,46 mmol) eines leicht violetten Feststoffes (19%)
$^1$H-NMR ($CDCl_3$, 200 MHz, 25°C): 7.50 (m, 4 H), 8.07 (m, 5 H), 8.47 (d, 2 H)

IVa+b) Synthese der Liganden tpy-Cl)$_2$/ Fe(tpy-Cl)$_2$+ Synthese Eisenkomplex

Der Ligand tpy-Cl wurde bei HetCat bestellt. Die Komplexierung erfolgte analog wie bei bbip-H etc.

Va+b) Synthese des Liganden (tpy-ph-$NH_2$) (4'-(4-nitrophenyl)-2,2':6,2''-terpyridine) + Synthese Eisenkomplex

Eine Mischung aus 2-Acetylpyridin (5 g, 41.5 mmol) und 4-Nitrobenzaldehyd (3.17 g, 21 mmol) in $CH_3OH$ (170 ml) wurde mit 15% aq. KOH (15 mL) und konz. $NH_4OH$ (160 mL) drei Tage bei Raumtemperatur kräftig gerührt. Der Niederschlag wurde durch Vakuumfiltration gesammelt, mit Wasser und dann mit kaltem Methanol gewaschen und in Ethylacetat gelöst. Das organische Filtrat wurde mit 1% $NaHCO_3$ gewaschen und mit $MgSO_4$ getrocknet. Nach Entfernen des Lösungsmittels unter verringertem Druck wurde das braune Rohprodukt durch zweimaliges Umkristallisieren mit $C_2H_5OH$ gereinigt. Man erhilet das reine 4'-(4-Nitrophenyl)-2,2':6,2"-terpyridin (Ausbeute: 34%). Eine Mischung von 4'-(4-Nitrophenyl)-2,2':6,2"-terpyridin und $SnCl_2$ (1.536 g, 6.8 mmol) in konzentrierter Salzsäure (12 mL) wurde für 8 Stunden auf 80°C erwärmt. Nach Abkühlen auf Raumtemperatur wurde der durch Vakuumfiltration gewonnene Rückstand in kühles Wasser gegossen, und der pH-Wert wurde mit $NaHCO_3$-Lösung auf 12-13 eingestellt. Der Feststoff wurde filtriert und durch Säulenchromatographie gereinigt (basisches Aluminiumoxid, Elutionsmittel Petrolether/Ethylacetat = 1:1), wobei das reine Produkt erhalten wurde (Ausbeute: 62%).

B) Cyclovoltammetrische Versuche

I) mit (Fe-bbip_H)$_2$

(Fe-bbip_H)$_2$ wurde in einer Konzentration von 3,5 mM in Acetonitril und 0,1 M $LiClO_4$ gelöst. Als Gegen- und Referenzelektrode diente jeweils ein Silberdraht. Das Cyclovoltammogramm (CV) ist in **Figur 2a** gezeigt.
**Figur 2b** zeigt verschiedene Spektren (MLCT-Banden) des Fe-bbip_H)$_2$-Komplexes bei verschiedenen Spannungen in Acetonitril und TBAPF (Tetrabutylammoniumhexafluorophosphat) als Leitsalz (0,1 mol/l). Die Schicht wurde auf mit ITO beschichtetem Glas aufgebracht; als Gegenelektrode wurde eine Goldplatte eingesetzt. Die durchgezogenen Linien kennzeichnen die Spannungserhöhung, und die gestrichelten Linien die Spannungsabsenkung. Es ist ersichtlich, dass die MLCT-Bande mit einem Maximum bei 550-650 nm durch Erhöhen der Spannung komplett verschwindet. Bei 1190 mV ist die Bande vollständig verschwunden, weil das gesamte Eisen(II) zu farblosem Eisen(III) oxidiert ist. Der Komplex lässt sich somit von blau zu farblos schalten. Dies deckt sich auch mit dem Verschwinden der Farbe beim Aufnehmen der Cyclovoltammogramme. Betrachtet man die gestrichelten Linien in Abb. 2b, erkennt man, dass beim Zurückfahren der Spannung auf 0 V das Maximum wieder erscheint. Vergleicht man die Absorptionsmaxima der beiden Spektren bei 1050 mV, so ist zu erkennen, dass das Maximum, welches beim Erhöhen der Spannung im Bereich 550-650 nm auftritt, kleiner ist (Differenz ca. 0,1 a.u.). Dies liegt aber lediglich an der Zeit, die das System braucht, um den Komplex wieder zu reduzieren. Bei 0 mV ist deutlich zu sehen, dass das Maximum seinen ursprünglichen Wert wieder erreicht hat.
In **Figur 4** ist gezeigt, dass die Absorption (Abs) des Komplexes in Abhängigkeit von der Schichtdicke (d) linear ist. Die Gleichung hierfür lautet Abs = 0,00507·d (Schichtdicke) (d.h. eine Absorption von 2,3 entspricht einer Transparenz von 10%, und eine Absorption von 4,3 entspricht einer Transparenz von 1 %). Das Bestimmtheitsmaß $R^2$ ist größer als 99%. Somit lässt sich mit Hilfe der gemessenen Absorption der MEPE-Schichten leicht die Schichtdicke anhand dieser Gleichung bestimmen.

II) Reversible Schaltbarkeit der Komplexe Fe(bbip)_X (X= H; OH), Fe(tpy-Cl)$_2$ und Fe(tpy-ph-NH$_2$)

Der Fe(bbip_OH)-Komplex besitzt eine rotbräunliche Farbe, der Fe(tpy-Cl)$_2$-Komplex ist rosa ("pink"), der Fe(tpy-ph-NH$_2$)-Komplex ist hellviolett und der Fe(bbip_H)$_2$-Komplex ist hellblau. Werden die vier Komplexe Molekularverhältnis 5:2:2:2 in Ethanol, ergibt sich ein graugefärbte Lösung.

Zum Nachweise der Reversibilität der Schaltbarkeit dieser Komplexe ist in der **Figur 14** das jeweilige cyclische Voltammogramm aufgetragen.

III) Reversible Schaltbarkeit des Gemischs der Komplexe Fe(bbip_OH)$_2$, Fe(bbip_H)$_2$, Fe(tpy-Cl) und Fe(tpy-ph-HN$_2$)

Um das Ziel einer möglichst breiten, reversibel schaltbaren Absorptionsbande zu erreichen, können mehrere Komplexe, deren Maxima der MLCT-Banden bei geringfügig unterschiedlichen Wellenlängen liegen, gemischt werden (siehe **Figuren 3a und 3b**):

bbip_OH (MLCT: $\lambda_{max}$ = 501 nm; $\varepsilon$ = 2363 l/(mol·cm))

tpy-Cl (MLCT: $\lambda_{max}$ = 557 nm; $\varepsilon$ = 15943 l/(mol·cm))

tpy-ph-NH$_2$ (MLCT: $\lambda_{max}$ = 578 nm; $\varepsilon$ = 13971 l/(mol·cm))

bbip_H (MLCT: $\lambda_{max}$ = 592 nm; $\varepsilon$ = 12709 l/(mol·cm))

Mit dieser Lösung wird eine PET/ITO-Folie beschichtet, die anschließend mit einer Cu-Folie kontaktiert wird. Das so beschichtete Substrat lässt sich in einem elektrochromen Fenster bei ~1,1 V von grau nach farblos schalten, was im in **Figur 3a** gezeigten Spektrum deutlich wird. Aus Fig. 3b, dem UV/VIS-Spektrum der einzelnen Komplexe sowie des Gemischs, wird deutlich, dass die Überlagerung mehrerer Einzelspektren zur Verbreiterung des Absorptionsbereichs führt.

IV) Schaltbarkeit von Fe-MEPE-Schichten

Bereits mit niedrigen Spannungen lässt sich ein reversibler Farbwechsel des Metallions der MEPE-Schicht von farbig zu transparent erzeugen. Bei der Oxidation des Fe(II)-MEPE nach Fe(III)-MEPE ist ein reversibles Schalten von blau zu farblos bei einer Spannung von etwa 1.6 V zu beobachten. Die Absorption ist dabei direkt proportional zur Schichtdicke. Je nach Konzentration der Lösung kann die Schichtdicke der Arbeitselektrode im Bereich von wenigen nm bis mehreren hundert nm variiert werden und so auf individuelle Bedürfnisse in der schaltbaren Absorption angepasst werden (siehe **Figur 4**). Die Schaltvorgange sind über 10000 Zyklen stabil.

C) Elektrochrome Zellen

I) Vergleichsbeispiel mit Fe-MEPE als Arbeitselektrode und ITO als Gegenelektrode

Anhand von cyclischen Voltammogrammen konnte festgestellt werden, dass die Lithiuminterkalation in die ITO-Katode nicht reversibel ist. Im ersten Zyklus findet ein irreversibler Prozess bei 1,15 V gegen Li/Li+ statt. In den folgenden Zyklen stabilisiert sich ein weiterer Prozess um 1,7 V. Mit steigender Zyklenzahl verbreitert sich der Peak immer weiter, der Einlagerungs-/Auslagerungsprozess wird also immer langsamer. Aus **Figur 11a** ist erkennbar, dass sich die Ladung in den ersten 100 Zyklen von ca. 7,5 mC/cm$^2$auf knapp 15 mC/cm$^2$ erhöht. In den folgenden Zyklen fällt sie jedoch um etwa 1 mC/cm$^2$pro 100 Zyklen ab. Nach 800 Zyklen kann sie nur noch knapp über 5 mC/cm$^2$ aufnehmen. Es ist offensichtlich, dass die geforderte Ladung von 5 mC/cm$^2$ in der Doppelschicht nicht gespeichert werden kann.

Die spezifische Ladung über der Spannung ist in **Figur 11b** gezeigt: Die fette schwarze Linie stellt den Anteil der Doppelschicht an der Ladungsfähigkeit der Elektrode dar. **Figur 11c** zeigt deutlich, dass eine Zelle mit ITO-Gegenelektrode nur über wenige Zyklen schalten kann. Der Hub der Extinktion beträgt 0,15 bis 0,63. Bei hundert Zyklen und mehr bricht das System jedoch zusammen. Der optische Hub ist nicht mehr gewährleistet und damit liegt auch keine Langzeitstabilität über mehr als 100 Zyklen vor. Eine Stabilität über die geforderten 10 000 Zyklen ist damit keinesfalls erfüllbar.

II) Vergleichsbeispiel mit Fe-MEPE als Arbeitselektrode und FTO als Gegenelektrode

Das zyklische Voltammogramm der FTO-Elektrode **(Figur 12a)** zeigt einen scharfen Reduktionspeak bei 1,1 V und einen sehr breiten Rücklauf über den kompletten Spannungsbereich bis 3,5 V. Die Oxidation, also die Deinterkalation des Lithiums, ist demnach deutlich gehemmt und benötigt hohe Überspannungen bei der geforderten hohen Entladerate. Die spezifische Ladung **(Fig. 12b)** nimmt über die ersten 500 Zyklen zu. Danach fällt die Ladung aufgrund der mechanischen Beanspruchung in der Schicht im 600. und 700. Zyklus deutlich ab. Ohnehin kann die Doppelschicht die geforderten 5 $mC/cm^2$ nicht aufnehmen. Bei dieser Ladungsmenge würde sie in einen kritischen Bereich unter 1 V fallen, Lithiumabscheidung auf der Glasoberfläche und damit ein Erblinden der Zelle wäre die Folge. Daher ist FTO als Gegenelektrode für langzeitstabile elektrochrome Zellen nicht geeignet.

III) Beispiel mit Fe-MEPE als Arbeitselektrode und Titandioxid-Vanadiumoxid (TVO)-Gegenelektrode

Die Fe-MEPE-Elektrode wurde aus einer 35.0 mmol/l ethanolischen Fe-MEPE-Lösung mit einer Ziehgeschwindigkeit von 100 mm/min hergestellt (Schichtdicke ~ 170 nm). Als Substrat wurde ITO-Glas verwendet. Die Gegenelektrode wurde von der Firma EControl Glas mittels Sputtern hergestellt. Die Dicke der TVO- (Titanvanadat-)Schicht beträgt etwa 150 nm.

Die Zelle und ihre Schaltzustände sind schematisch in **Figur 7** dargestellt. Aus dem zyklischen Voltammogramm der Figur 5a und der Auftragung der spezifischen Ladung über der Spannung in **Figur 5b** wird deutlich, dass die TVO-Elektrode reversibel über 500 Zyklen schaltet und dass ihre spezifische Ladung über 10 $mC/cm^2$ auch nach 500 Zyklen immer noch die gesamte Ladung der MEPE-Elektrode aufnehmen kann.

Die Titanoxid-Vanadiumoxid-Gegenelektrode kann demnach also Ladung reversibel einlagern. Bei der Titanoxid-Vanadiumoxid-Elektrode findet stabil über mindestens 500 Zyklen ein Prozess zwischen 2,75 und 3,75 V statt, der sich nicht wesentlich verlangsamt, was das Ergebnis über die schaltbare Zyklenzahl verdeutlicht. Bei der erfindungsgemäßen elektrochromen Zelle mit TVO-Elektrode zeigt sich sowohl am Verlauf der zyklischen Voltammogramme wie auch des Absorptionshubs über 1 000 Zyklen ein nahezu identisches Bild (Fig. 13). Damit wird bestätigt, dass die Zellen über wesentlich höhere Zyklenzahlen schaltbar sind und somit eine hohe Langzeitstabilität aufweisen. Zellen mit diesem Aufbau zeigen selbst über 10000 geschaltete Zyklen von farbig nach farblos keine makroskopisch sichtbare "Ermüdung". Zwar kann man der physikalischen Transmissionsmessung in Fig. 9a/b eine scheinbare Abnahme des Transmissionshubes entnehmen; diese ist jedoch der Tatsache geschuldet, dass die Zelle sehr schnell (im Takt von 10 s) geschaltet wurde.

IV) Beispiel mit Fe-MEPE als Arbeitselektrode und Preußisch-Blau als Gegenelektrode

Die Fe-MEPE-Schichten wurden aus einer ethanolischen Fe-MEPE-Lösung mit einer Konzentration von 35.0 mmol/l hergestellt. Durch die Ziehgeschwindigkeit kann die Dicke und somit die Ladungskapazität der Schichten genau eingestellt werden. Die Preußisch-Blau-Gegenelektrode wurde durch galvanostatische Abscheidung an einer elektrophoretischen Tauchlackieranlage (ETL) in einer wässrigen Lösung aus 10 mmol/l $K_3Fe(CN)_6$ und 10 mmol/l $FeCl_3 \cdot 6 H_2O$ hergestellt. Als Substrat wurde FTO-Glas verwendet. Die Ladungskapazitäten der beiden Elektroden müssen immer aufeinander angepasst werden.

Die Zelle ist schematisch in **Figur 8** dargestellt.

Die Dicke und Konzentration der Gegenelektrode wurde dabei so eingestellt, dass sie etwa 4 $mC/cm^2$ und damit 10% mehr an Ladung aufnehmen konnte, als die Fe-MEPE-Schicht maximal abgeben konnte, so dass gewährleistet ist, dass die MEPE-Elektrode mit ihrem starken Absorptionshub stets voll entladen ist. In Figur 6a sind die Ladekurven einer PB-Schicht zwischen 10 $\mu A/cm^2$ und 10.000 $\mu A/cm^2$ gezeigt, während in Figur 6b das zugehörige Absorptionsspektrum im sichtbaren Bereich zwischen 320 nm und 820 nm zu sehen ist.

Anhand der Vergleichsversuche kann damit gezeigt werden, dass die aus dem Stand der Technik bekannten elektrochemischen Zellen, deren Effekte auf der Redox-Schaltung von MEPE-Systemen mit ITO als Gegenelektrode beruht, die erforderliche Langzeitstabilität nicht aufweisen, denn spätestens ab 100 Schaltzyklen degradieren die Zellen irreversibel. Erst die Kombination einer Arbeitselektrode wie vorliegend definiert mit einer geeigneten Gegenelektrode, welche die aufgezeigten Kriterien erfüllt, führt zu langzeitstabilen elektrochromen Zellen, die eine hohe Anzahl an Schaltzyklen ausführen können.

Figur 1: Schematischer Aufbau einer elektrochromen Zelle

Figur 2a: Cyclovoltammogramm von Fe-(bbip_H)$_2$, die Messung fand in Acetonitril und $LiClO_4$ [0,1 mol/l] als Leitsalz statt, mit Silberdraht als GE und RE

Figur 2b: Spektren des Fe-(bbip(X=H))2-Komplexes bei verschiedenen Spannungen in Acetonitril und TBAPF als Leitsalz (0,1 mol/l). Die Schicht wurde auf ITO-Glas aufgebracht und als Gegenelektrode wurde eine

| | |
|---|---|
| | Goldplatte eingesetzt. Durchgezogene Linien kennzeichnen die Spannungserhöhung und gestrichelte die Spannungsabsenkung |
| Figur 3a: | Cyclovoltammogramm des Mischkomplexes, die Messung fand in Acetonitril und $LiClO_4$ [0,1 mol/l] als Leitsalz statt, mit Silberdraht als GE und RE |
| Figur 3b: | UV/Vis-Spektren des Mischkomplexes sowie der Einzelkomplexe |
| Figur 4: | die Absorption unterschiedlicher Fe-MEPE-Lösungen: Die acht dargestellten Punkte ergeben sich bei der Untersuchung von vier verschiedenen Lösungen mit jeweils anderen Konzentrationen (14,0 mM, 21,0 mM, 28,0 mM und 35,0 mM) in Ethanol, wobei jede dieser Lösungen einmal bei einer Ziehgeschwindigkeit von 50 mm/min und einmal bei einer Ziehgeschwindigkeit von 100 mm/min aufgetragen worden war. Die Absorption ist in willkürlichen Einheiten aufgetragen; es lässt sich daraus errechnen, dass eine Absorption von 2.3 einer Transparenz von 10% und eine Absorption von 4.3 einer Transparenz von 1% entspricht |
| Figur 5a: | Zyklisches Voltammogramm der TVO-Elektrode |
| Figur 5b: | Auftragung der spezifischen Ladung über der Spannung der TVO-Elektrode |
| Figur 6a: | Ladekurven zwischen 10 $\mu A/cm^2$ und 10.000 $\mu A/cm^2$ einer Preußisch-Blau-Schicht, die mit 4 $mC/cm^2$ auf ein leitfähiges Substrat abgeschieden wurde |
| Figur 6b: | Das zu 6a gehörige Absorptionsspektrum im sichtbaren Bereich zwischen 320 nm und 820 nm. |
| Figur 7: | Vollzelle, die aus Fe-MEPE und TVO-Elektroden besteht |
| Figur 8: | Vollzelle, die aus Fe-MEPE und PB-Elektroden besteht |
| Figur 9a: | Transmissionshub einer Vollzelle nach 11 000 Zyklen; Elektroden: Fe-MEPE gegen TVO; Elektrolyt: 1 M $LiClO_4$ in PC + 20 Gew.% PMMA |
| Figur 9b: | Schaltvorgang einer Fe-MEPE/ TVO-Zelle über 10 000 Zyklen |
| Figur 10: | Temperaturabhängigkeit der Absorption von Fe-MEPE |
| Figur 11a: | Zyklisches Voltammogramm einer ITO/MEPE-Vollzelle |
| Figur 11b: | Auftragung der spezifischen Ladung über der Spannung einer ITO/MEPE-Vollzelle. Die schwarze Linie stellt den Anteil der Doppelschicht an der Ladungsfähigkeit der Elektrode dar. |
| Figur 11c: | Spektroelektrochemische Untersuchung an einer ITO/MEPE-Vollzelle über 1000 Zyklen (CV = Zyklus) |
| Figur 12a: | Zyklisches Voltammogramm einer FTO/MEPE-Vollzelle. |
| Figur 12b: | Auftragung der spezifischen Ladung über der Spannung einer FTO/MEPE-Vollzelle. Die schwarze Linie stellt den Anteil der Doppelschicht an der Ladungsfähigkeit der Elektrode dar. |
| Figur 13: | Spektroelektrochemische Untersuchung an einer TiVOx/MEPE-Vollzelle über 1000 Zyklen(CV = Cyclus) |
| Figur 14: | Zyklisches Voltammogramm der vier Komplexe Fe(bbip)_X (X=H), Fe(bbip)_X (X=OH), $Fe(tpy\text{-}Cl)_2$ und $Fe(tpy\text{-}ph\text{-}NH_2)$ |

**Patentansprüche**

1. Elektrochrome Zelle, umfassend
ein erstes Substrat und ein zweites, transparentes Substrat, die jeweils mit einer leitenden Beschichtung versehen sind,
eine schichtförmige Arbeitselektrode, die in Kontakt mit der leitenden Beschichtung eines der beiden Substrate steht und eine chemische Verbindung aufweist, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechenden Farbabschwächung einhergeht, und ein Elektrolytmaterial, das sich zwischen der Arbeitselektrode und dem anderen Substrat befindet und bewegliche Ionen enthält, wobei sich zwischen dem Elektrolytmaterial und der leitenden Beschichtung des anderen Substrats eine zweite Elektrode befindet, die in der Lage ist, bewegliche Ionen des Elektrolytmaterials zu interkalieren und/oder eine Redoxreaktion einzugehen, wobei das Material der zweiten Elektrode beim Übergang vom oxidierten in den reduzierten Zustand keiner Farbvertiefung im Wellenlängenbereich der Farbvertiefung der Metall-Komplexverbindung und vorzugsweise gar keiner Farbvertiefung unterliegt, **dadurch gekennzeichnet, dass** die chemische Verbindung eine Metall-Komplexverbindung ist, dass die beweglichen Ionen Metallkationen sind, und dass die zweite Elektrode eine Ladungskapazität besitzt, die mindestens der Ladungskapazität der Arbeitselektrode entspricht.

2. Elektrochrome Zelle nach Anspruch 1, worin das erste Substrat ein transparentes Substrat ist.

3. Elektrochrome Zelle nach einem der Ansprüche 1 und2, worin das Material der zweiten Elektrode beim Übergang vom reduzierten in den oxidierten Zustand einer Farbvertiefung unterliegt.

4. Elektrochrome Zelle nach Anspruch 3, worin das Material der zweiten Elektrode Preußisch Blau oder ein Derivat

von Preußisch Blau aufweist.

5. Elektrochrome Zelle nach einem der Ansprüche 1 und 2, worin das Material der zweiten Elektrode ein Metalloxid ist, das in der Lage ist, Lithiumionen zu interkalieren, und insbesondere Titan-Vanadium-Oxid ist.

6. Elektrochrome Zelle nach einem der voranstehenden Ansprüche, worin die Metall-Komplexverbindung der Arbeitselektrode mindestens einen chelatisierenden Komplexliganden aufweist, der Metallatome über zwei oder mehr Stickstoff-, Sauerstoff- oder Schwefelatome binden kann, worin mindestens ein Teil der zwei oder mehr Stickstoff-, Sauerstoff- oder Schwefelatome des Komplexliganden freie Elektronenpaare aufweist.

7. Elektrochrome Zelle nach Anspruch 6, worin der mindestens eine chelatisierende Komplexligand mindestens einen aromatischen Heteroring aufweist, ausgewählt unter unsubstituiertem oder mit OH oder Halogen substituiertem Bis-(benzimidazolyl)pyridin, unsubstituiertem oder mit OH oder Halogen substituiertem Bis-(benzoxazolyl)pyridin, unsubstituiertem oder mit Halogen, Alkyl oder Aminophenyl substituiertem Terpyridin sowie Liganden, die zwei über eine Einfachbindung oder über einen zweibindigen Spacer, insbesondere über einen kohlenwasserstoffhaltigen Rest miteinander verbundene, unsubstituierte oder mit Halogen, Alkyl oder Aminophenyl substituierte Terpyridinreste enthalten.

8. Elektrochrome Zelle nach einem der voranstehenden Ansprüche, worin die Metallatome des chelatisierenden Komplexliganden ausgewählt sind unter Cr, Mn, Fe, Co, Ni, Cu, Mo, Ru, Rh, Pd oder einer Mischung davon, insbesondere unter Eisenionen.

9. Elektrochrome Zelle nach einem der vorstehenden Ansprüche, worin die leitende Beschichtung der Substrate ausgewählt ist unter dünnen Filmen leitfähiger Oxide, vorzugsweise ausgewählt unter ITO, FTO, ATO und AZO.

10. Elektrochrome Zelle nach einem der voranstehenden Ansprüche, worin der Elektrolyt eine ionische Flüssigkeit enthält, die Lithium-Ionen enthält.

11. Elektrochrome Zelle nach einem der Ansprüche 1 bis 9, worin der Elektrolyt ein Polymer auf Basis von Acrylaten ist.

12. Elektrochrome Zelle nach einem der vorstehenden Ansprüche, wobei der Elektrolyt ein Gelelektrolyt ist.

13. Verwendung der elektrochromen Zelle nach einem der Ansprüche 1 bis 12 als Verglasung von Gebäuden oder Fenstern, als Trennwand in Gebäuden oder als Fenster oder Trennwand in Bereichen des Fahrgasttransports in Automobilen, Zügen oder Flugzeugen.

14. Verwendung der elektrochromen Zelle nach einem der Ansprüche 1 und 3 bis 12 in Displays und elektronischen Papieren.

## Claims

1. An electrochromic cell, comprising
a first substrate and a second, transparent substrate, each provided with a conductive coating,
a layer-shaped working electrode which is in contact with the conductive coating of one of the two substrates and comprises a chemical compound capable of being subjected to a redox reaction, wherein the transition from the oxidized state to the reduced state is accompanied by a colour increase/intensification and the transition from the reduced state to the oxidized state is accompanied by a corresponding colour decrease, and
an electrolyte material which is located between the working electrode and the other substrate and contains mobile ions,
wherein a second electrode which is capable of intercalating mobile ions of the electrolytic material and/or to undergo a redox reaction is arranged between the electrolyte material and the conductive coating of the other substrate, wherein the material of the second electrode, in the transition from the oxidized state to the reduced state, does not undergo a colour increase in the wavelength range of the colour increase of the metal complex compound, and preferably no colour increase at all,
**characterized in that** the chemical compound is a metal complex compound, the mobile ions are metal cations, and the second electrode has a charge capacity corresponding at least to the charge capacity of the working electrode.

2. The electrochromic cell according to claim 1, wherein the first substrate is a transparent substrate.

3. The electrochromic cell according to claim 1 or 2, wherein the material of the second electrode undergoes a colour increase in the transition from the reduced state to the oxidized state.

4. The electrochromic cell according to claim 3, wherein the material of the second electrode comprises Prussian Blue or a derivative of Prussian Blue.

5. The electrochromic cell according to claim 1 or 2, wherein the material of the second electrode is a metal oxide capable of intercalating lithium ions, and is in particular a titanium vanadium oxide.

6. The electrochromic cell according to one of the preceding claims, wherein the metal complex compound of the working electrode comprises at least one chelating complex ligand capable of binding metal atoms through two or more nitrogen atoms, oxygen atoms or sulfur atoms, wherein at least a part of the two or more nitrogen atoms, oxygen atoms or sulfur atoms of the complex ligand has free electron pairs.

7. The electrochromic cell according to claim 6, wherein said at least one chelating complex ligand has at least one aromatic hetero ring selected from among unsubstituted unsubstituted bis-(benzimidazolyl)pyridine or bis-(benzimidazolyl)pyridine substituted with OH or a halogen, unsubstituted bis-(benzoxazolyl)pyridine or bis-(benzoxazolyl)pyridine substituted with OH or a halogen, unsubstituted terpyridine or terpyridine substituted with halogen, alkyl or aminophenyl, as well as ligands comprising two unsubstituted terpyridine residues or terpyridine residues substituted with halogen, alkyl or aminophenyl, bonded to each other via a single bond or via a bivalent spacer, in particular a hydrocarbon-containing residue.

8. The electrochromic cell according to one of the preceding claims, wherein the metal atoms of the chelating complex ligand are selected from Cr, Mn, Fe, Co, Ni, Cu, Mo, Ru, Rh, Pd or a mixture thereof, in particular from iron ions.

9. The electrochromic cell according to one of the preceding claims, wherein the conductive coating of the substrates is selected from thin films of conductive oxides, preferably selected from ITO, FTO, ATO and AZO.

10. The electrochromic cell according to one of the preceding claims, wherein the electrolyte contains an ionic liquid containing lithium ions.

11. The electrochromic cell according to any one of claims 1 to 9, wherein the electrolyte is a polymer based on acrylates.

12. The electrochromic cell according to one of the preceding claims, wherein the electrolyte is a gel electrolyte.

13. Use of the electrochromic cells according to any one of claims 1 to 12 as glazing of buildings or windows, as a partition wall in buildings or as a window or partition wall in the passenger transport sector in automobiles, trains or planes.

14. Use of the electrochromic cells according to any one of claims 1 and 3 to 12 in displays and electronic papers.

## Revendications

1. Cellule électrochrome, comprenant
un premier substrat et un deuxième substrat transparent, qui sont respectivement munis d'un revêtement conducteur, une électrode de travail en forme de couche, qui est en contact avec le revêtement conducteur d'un des deux substrats et qui présente un composé chimique, qui est en mesure de participer à une réaction d'oxydo-réduction, dans laquelle le passage de l'état oxydé à l'état réduit s'accompagne d'une intensification de la couleur et le passage de l'état réduit à l'état oxydé s'accompagne d'une atténuation correspondante de la couleur, et
un matériau d'électrolyte, qui se trouve entre l'électrode de travail et l'autre substrat et qui contient des ions mobiles, dans laquelle il se trouve entre le matériau d'électrolyte et le revêtement conducteur de l'autre substrat une deuxième électrode, qui est en mesure d'intercaler des ions du matériau d'électrolyte et/ou de participer à une réaction d'oxydo-réduction, dans laquelle le matériau de la deuxième électrode ne subit lors du passage de l'état oxydé à l'état réduit aucune intensification de la couleur dans le domaine de longueur d'onde de l'intensification de la couleur du composé complexe métallique et de préférence absolument aucune intensification de la couleur,

**caractérisée en ce que** le composé chimique est un composé complexe métallique, **en ce que** les ions mobiles sont des cations métalliques, et **en ce que** la deuxième électrode possède une capacité de charge, qui correspond au moins à la capacité de charge de l'électrode de travail.

**2.** Cellule électrochrome selon la revendication 1, dans laquelle le premier substrat est un substrat transparent.

**3.** Cellule électrochrome selon une des revendications 1 et 2, dans laquelle le matériau de la deuxième électrode subit une intensification de la couleur lors du passage de l'état réduit à l'état oxydé.

**4.** Cellule électrochrome selon la revendication 3, dans laquelle le matériau de la deuxième électrode présente du bleu de Prusse ou un dérivé du bleu de Prusse.

**5.** Cellule électrochrome selon une des revendications 1 et 2, dans laquelle le matériau de la deuxième électrode est un oxyde métallique, qui est en mesure d'intercaler des ions lithium, et est en particulier de l'oxyde de titane-vanadium.

**6.** Cellule électrochrome selon l'une quelconque des revendications précédentes, dans laquelle le composé complexe métallique de l'électrode de travail présente au moins un ligand complexe chélatant, qui peut lier des atomes métalliques au moyen de deux ou plus de deux atomes d'azote, d'oxygène ou de soufre, dans laquelle au moins une partie des deux ou plus de deux atomes d'azote, d'oxygène ou de soufre du ligand complexe présente des paires d'électrons libres.

**7.** Cellule électrochrome selon la revendication 6, dans laquelle ledit au moins un ligand complexe chélatant présente au moins un hétéro-anneau aromatique, choisi parmi la bis-(benzimidazolyl)pyridine non substituée ou substituée avec OH ou un halogène, la bis-(benzoxazolyl) pyridine non substituée ou substituée avec OH ou un halogène, la terpyridine non substituée ou substituée avec un halogène, un alkyle ou un aminophényle, ainsi que des ligands qui contiennent deux radicaux terpyridine liés l'un à l'autre par une liaison simple ou par un espaceur à liaison double, en particulier par un radical contenant un hydrocarbure, non substitués ou substitués avec un halogène, un alkyle ou un aminophényle.

**8.** Cellule électrochrome selon l'une quelconque des revendications précédentes, dans laquelle les atomes métalliques du ligand complexe chélatant sont choisis parmi Cr, Mn, Fe, Co, Ni, Cu, Mo, Ru, Rh, Pd ou un mélange de ceux-ci, en particulier parmi des ions fer.

**9.** Cellule électrochrome selon l'une quelconque des revendications précédentes, dans laquelle le revêtement conducteur des substrats est choisi parmi des films minces d'oxyde conducteurs, de préférence choisis parmi ITO, FTO, ATO et AZO.

**10.** Cellule électrochrome selon l'une quelconque des revendications précédentes, dans laquelle l'électrolyte contient un liquide ionique, qui contient des ions lithium.

**11.** Cellule électrochrome selon l'une quelconque des revendications 1 à 9, dans laquelle l'électrolyte est un polymère à base d'acrylates.

**12.** Cellule électrochrome selon l'une quelconque des revendications précédentes, dans laquelle l'électrolyte est un électrolyte gélifié.

**13.** Utilisation de la cellule électrochrome selon l'une quelconque des revendications 1 à 12 comme vitrage pour des bâtiments ou des fenêtres, comme paroi de séparation dans des bâtiments ou comme fenêtre ou paroi de séparation dans des zones de transport de passagers dans des automobiles, des trains ou des avions.

**14.** Utilisation de la cellule électrochrome selon l'une quelconque des revendications 1 et 3 à 12 dans des écrans d'affichage et des documents électroniques.

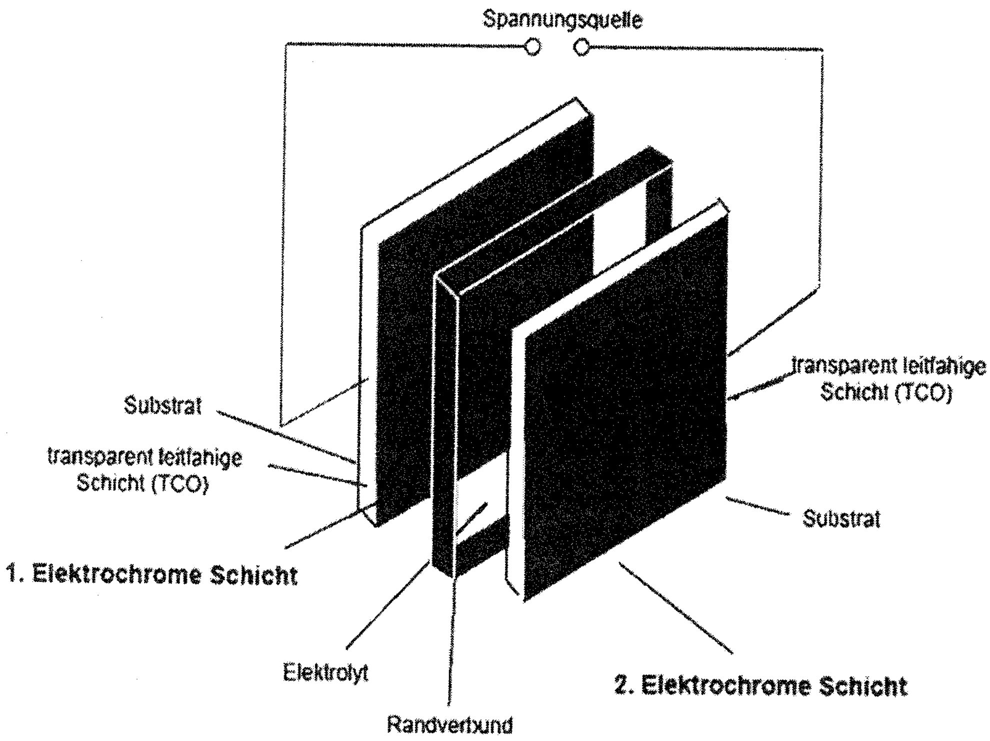


Figur 1

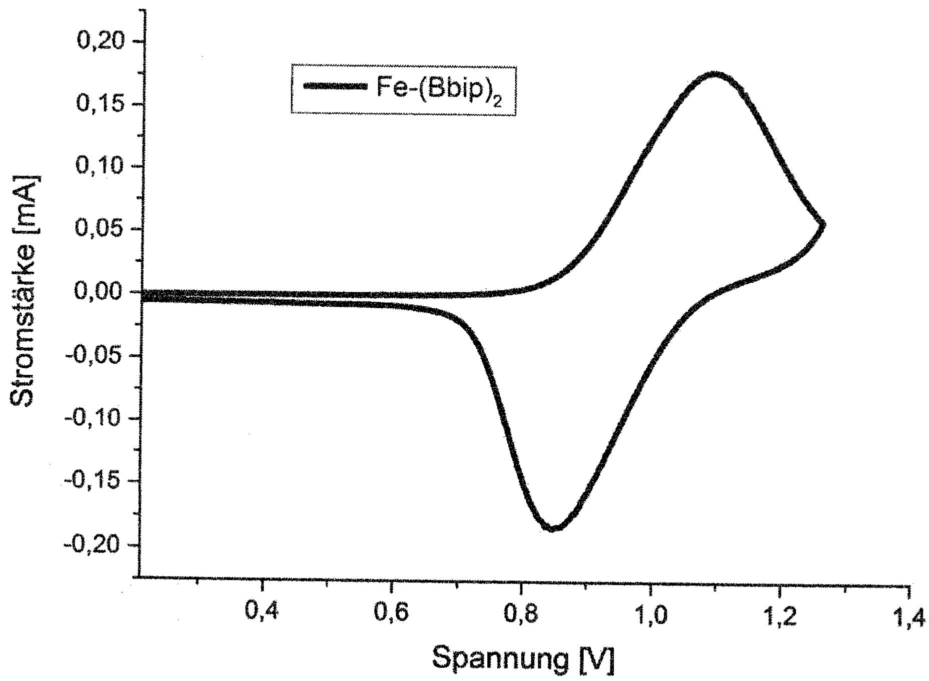


Figur 2a

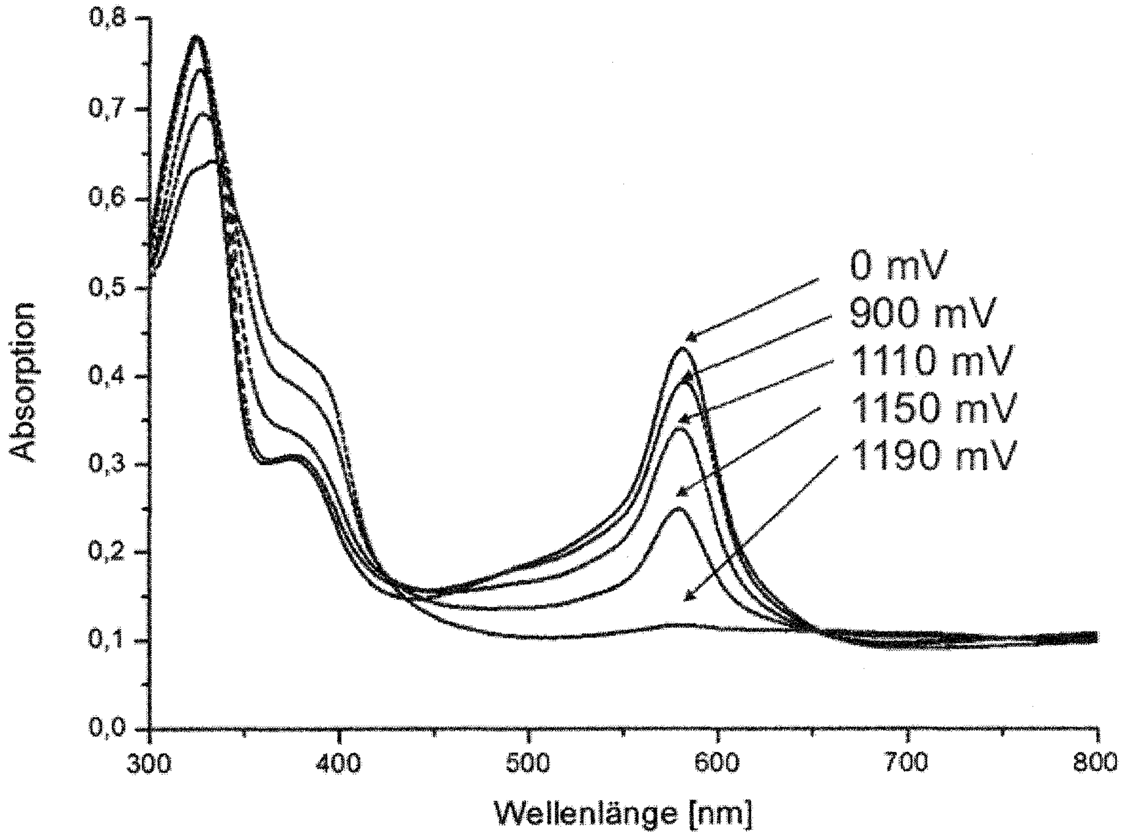


Figur 2b

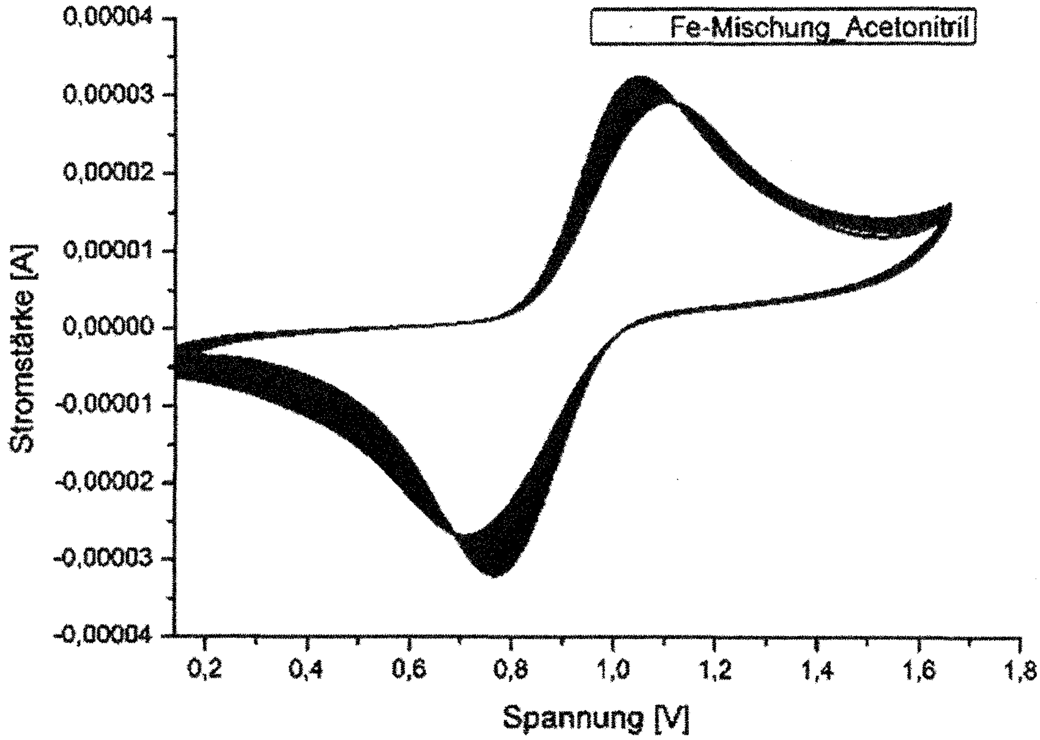


Figur 3a

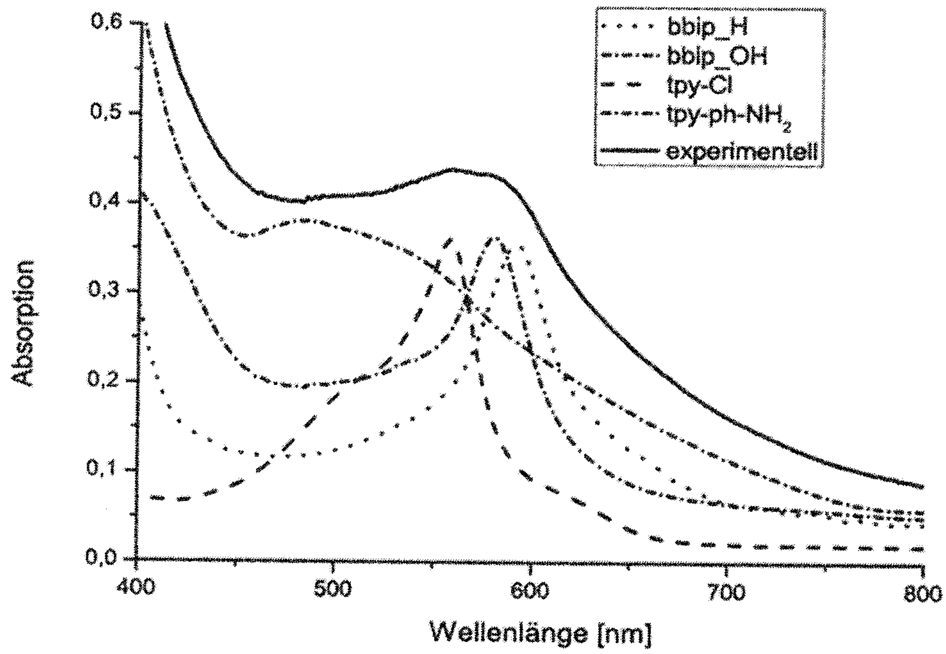


Figur 3b

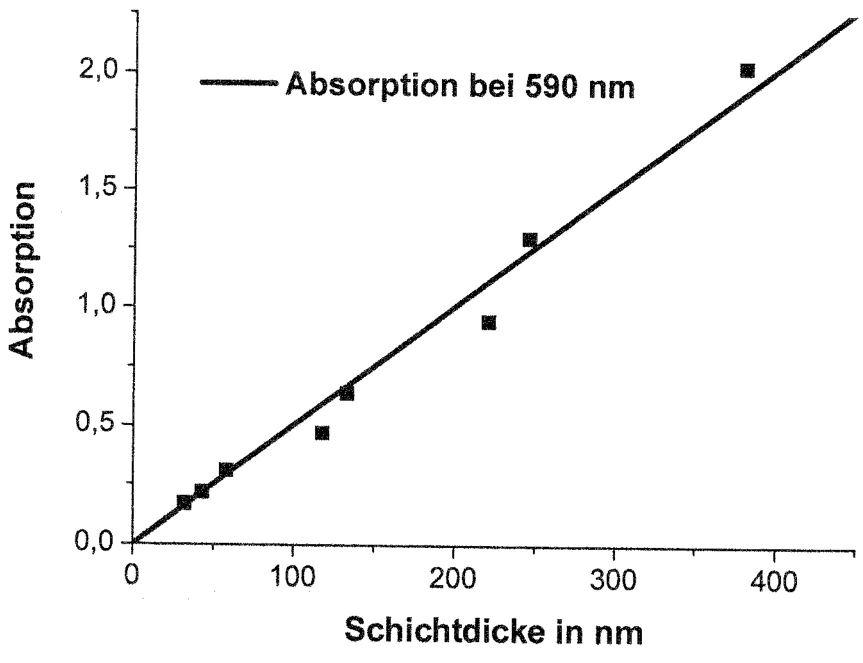


Figur 4

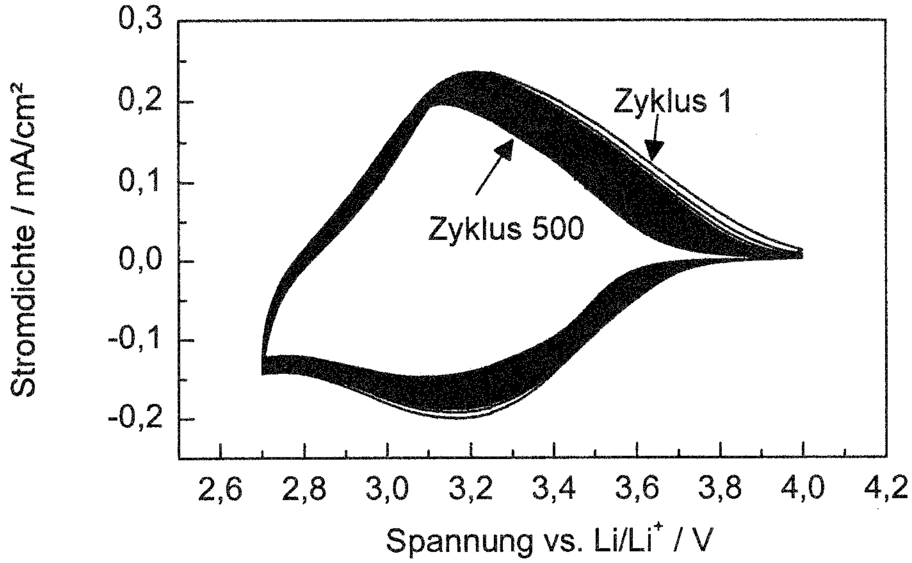


Figur 5a

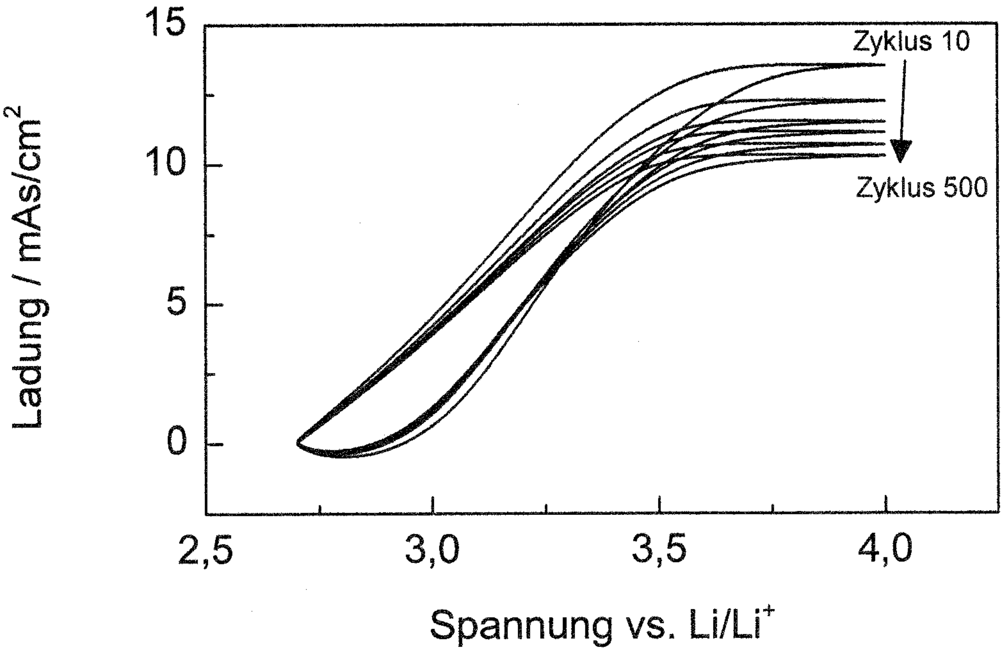


Figur 5b

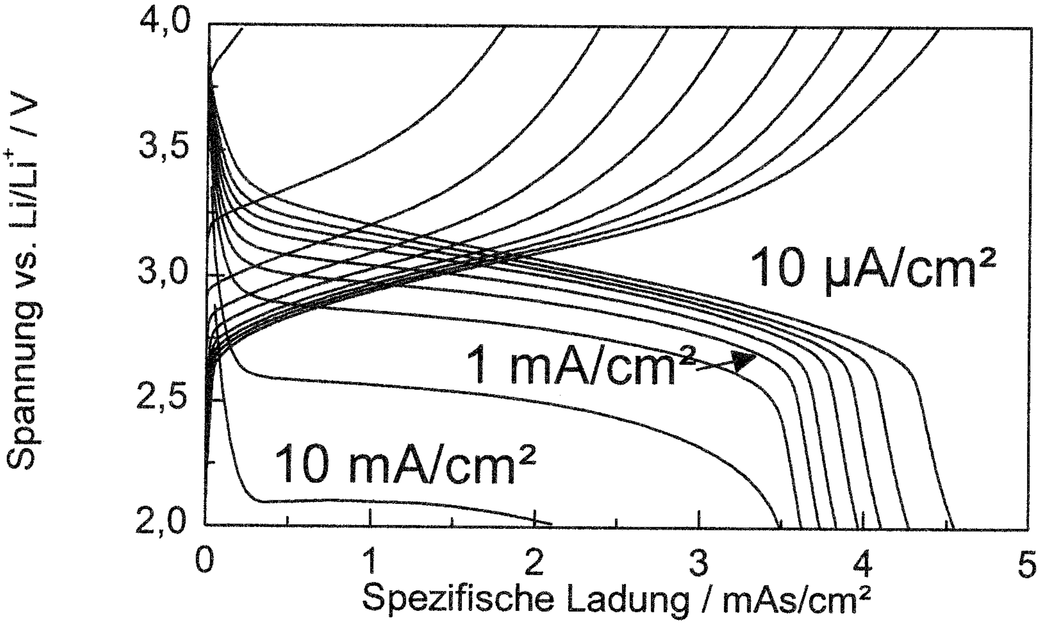


Figur 6a

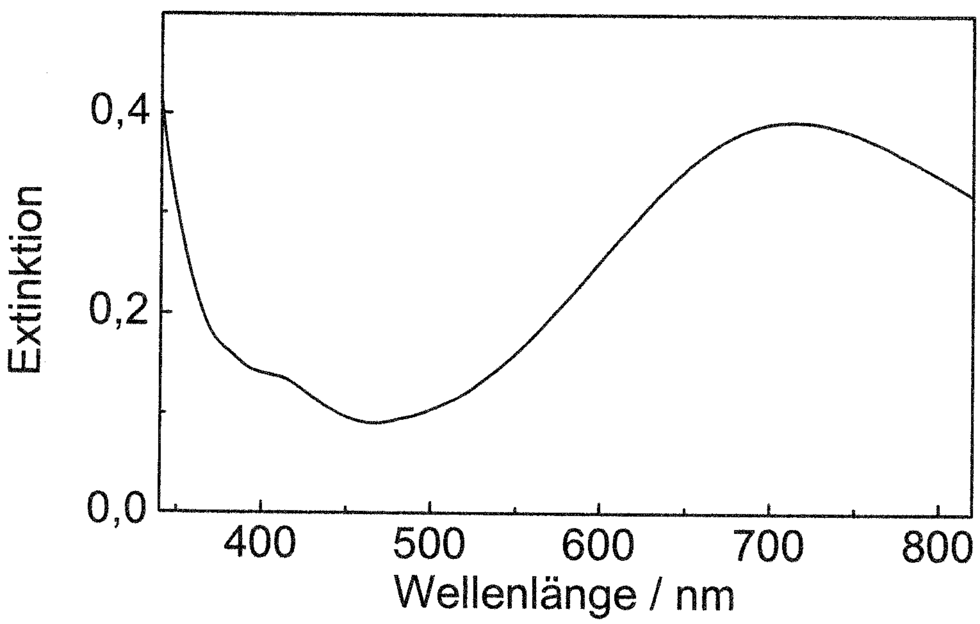


Figur 6b

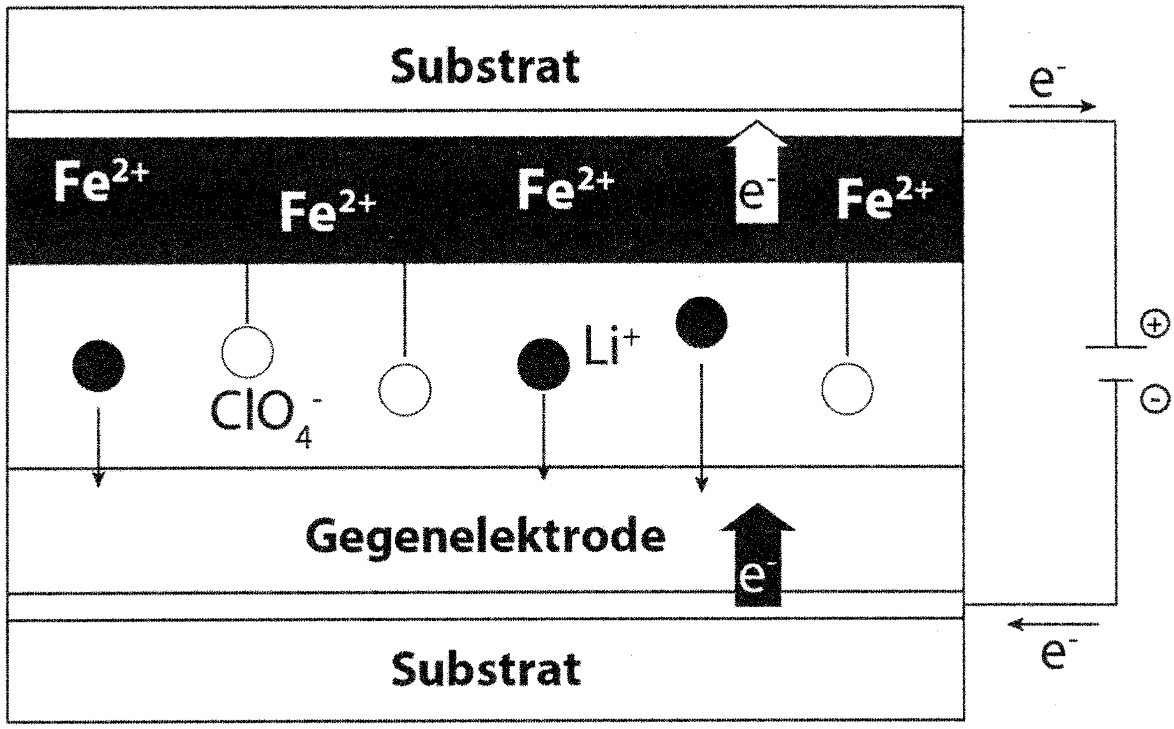


0 V (blauer Zustand)

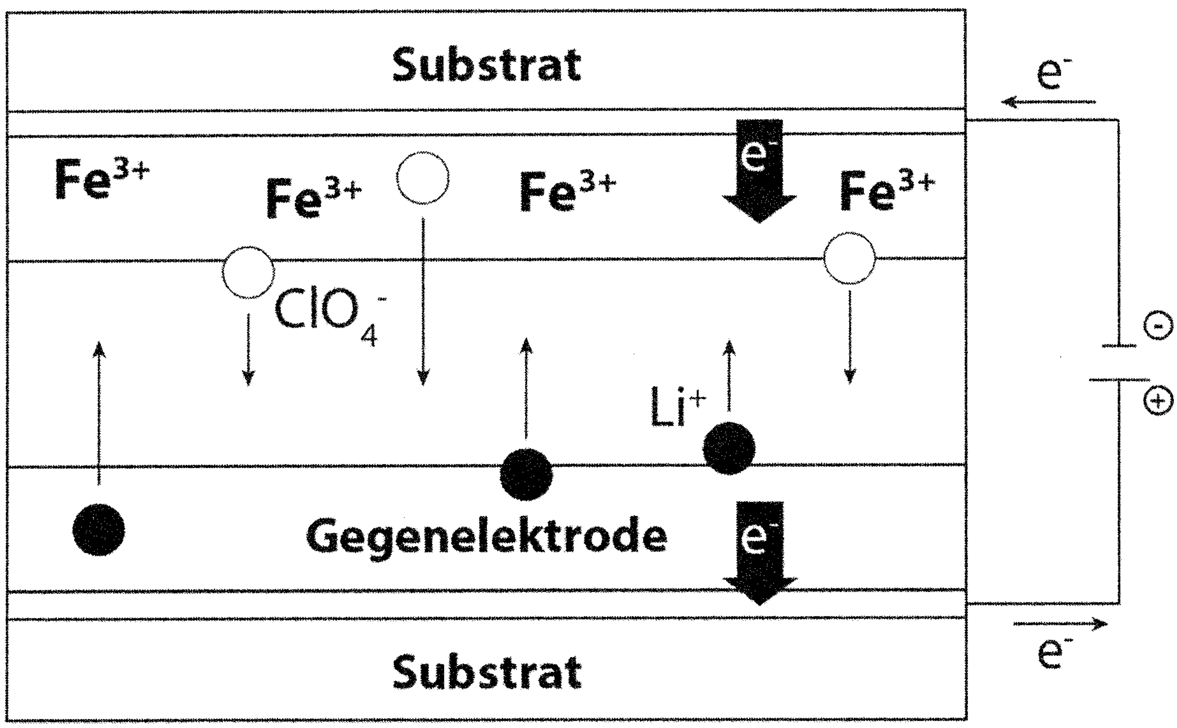


Figur 7

1,6 V (farbloser Zustand)

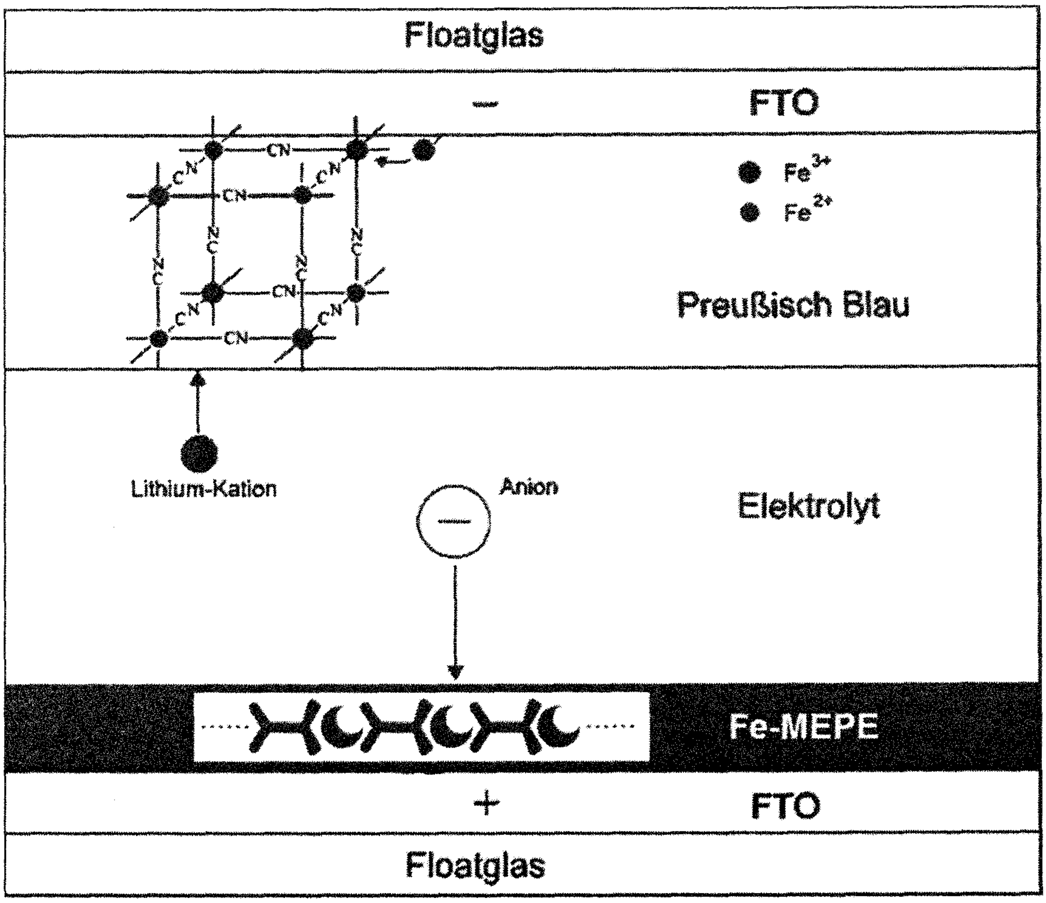


Figur 8

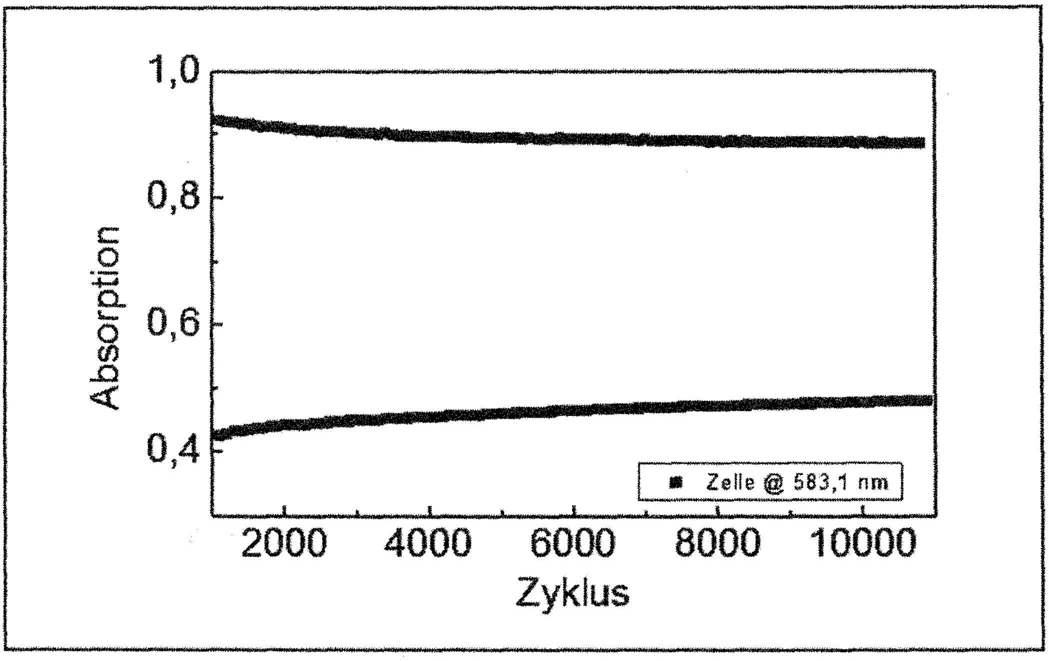


Figur 9a

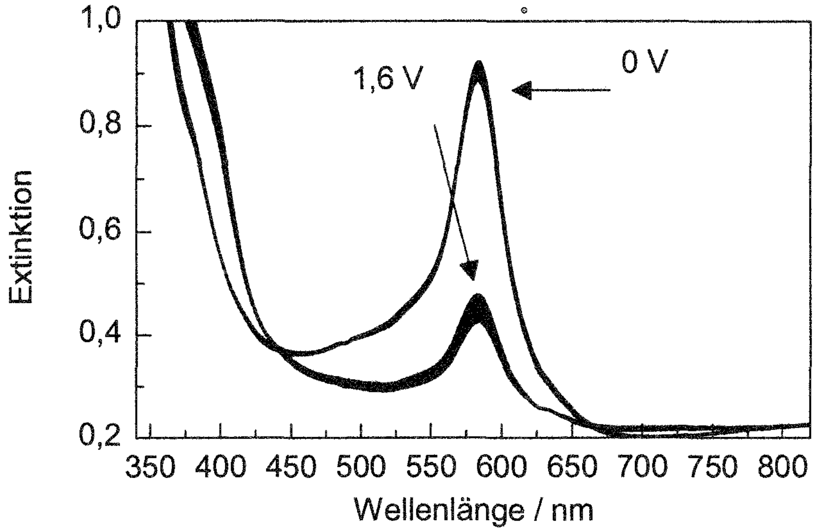


Figur 9b

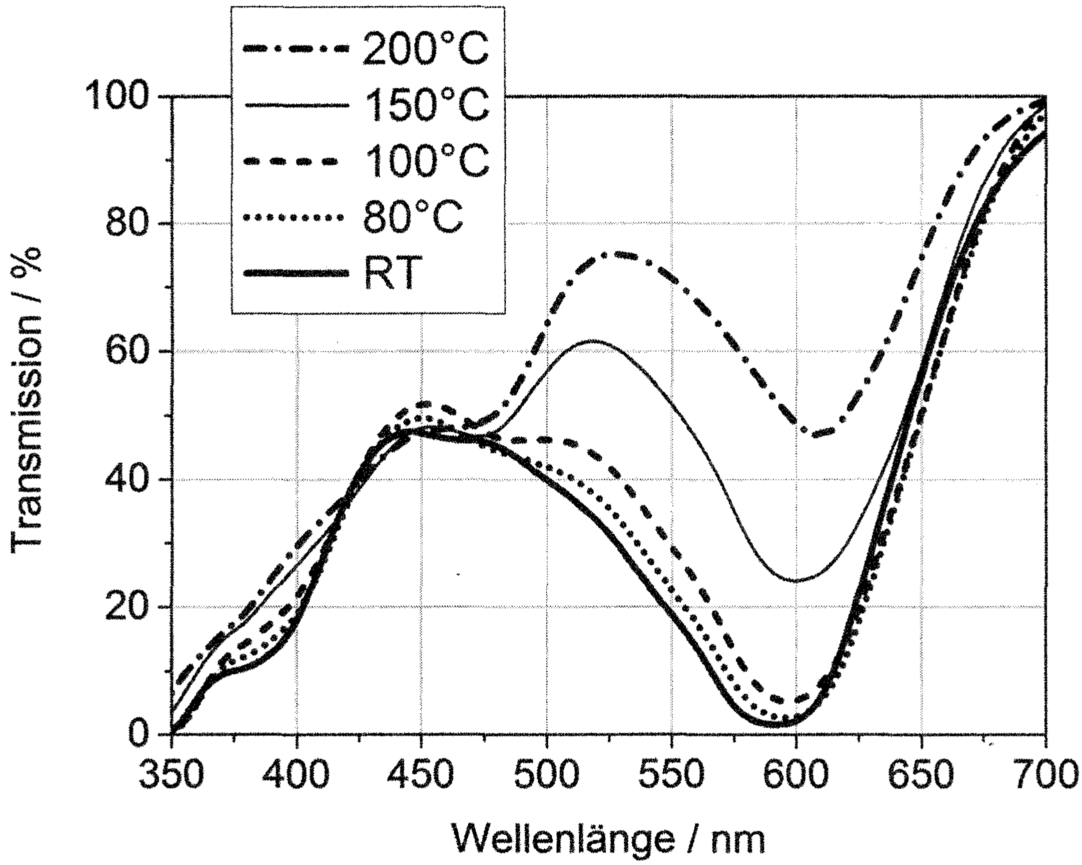


Fig. 10

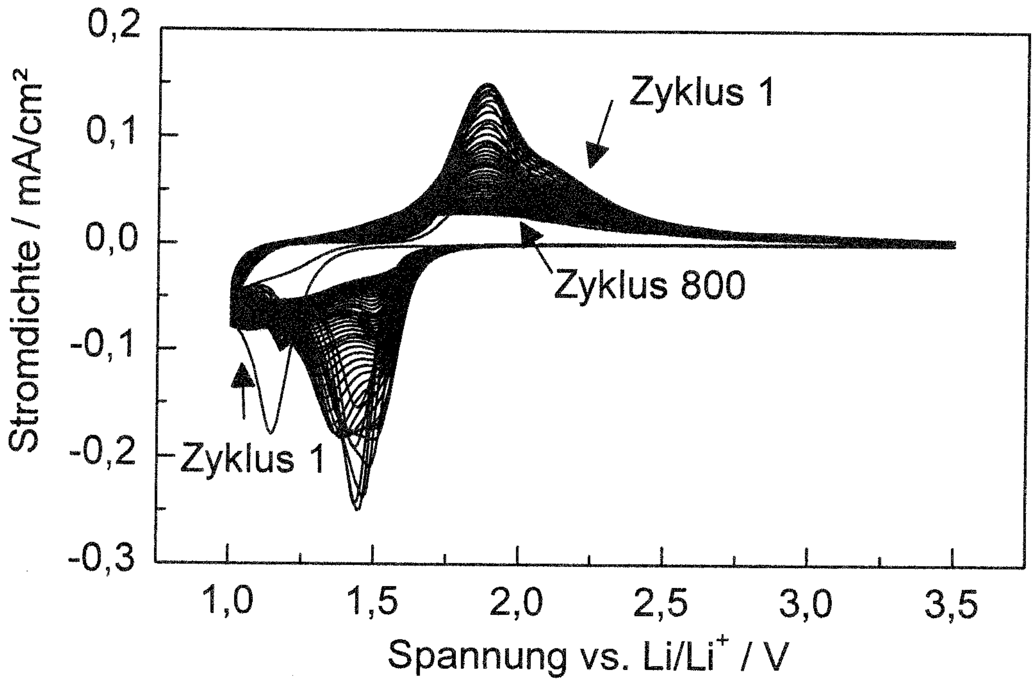


Figur 11a

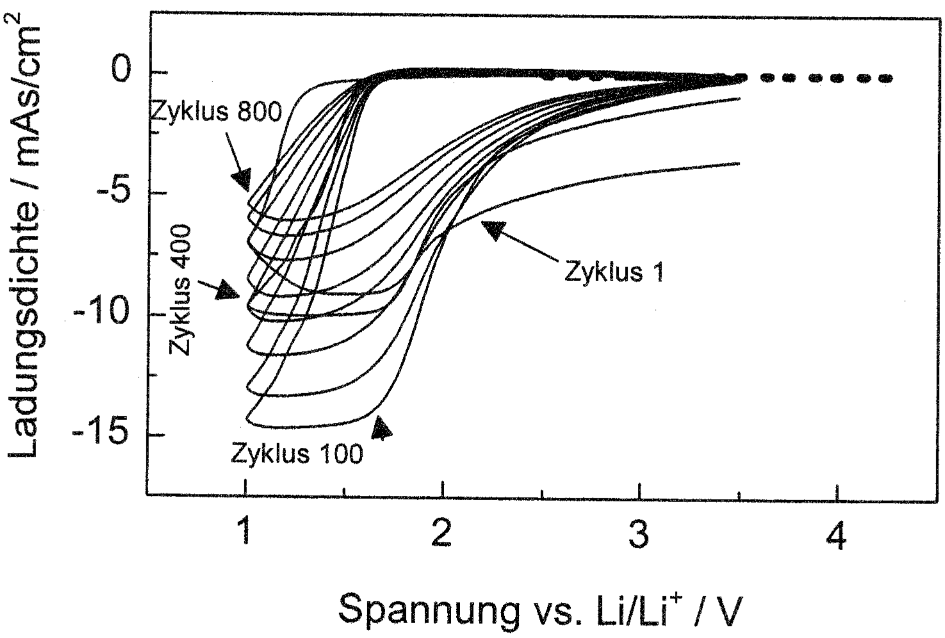


Figur 11b

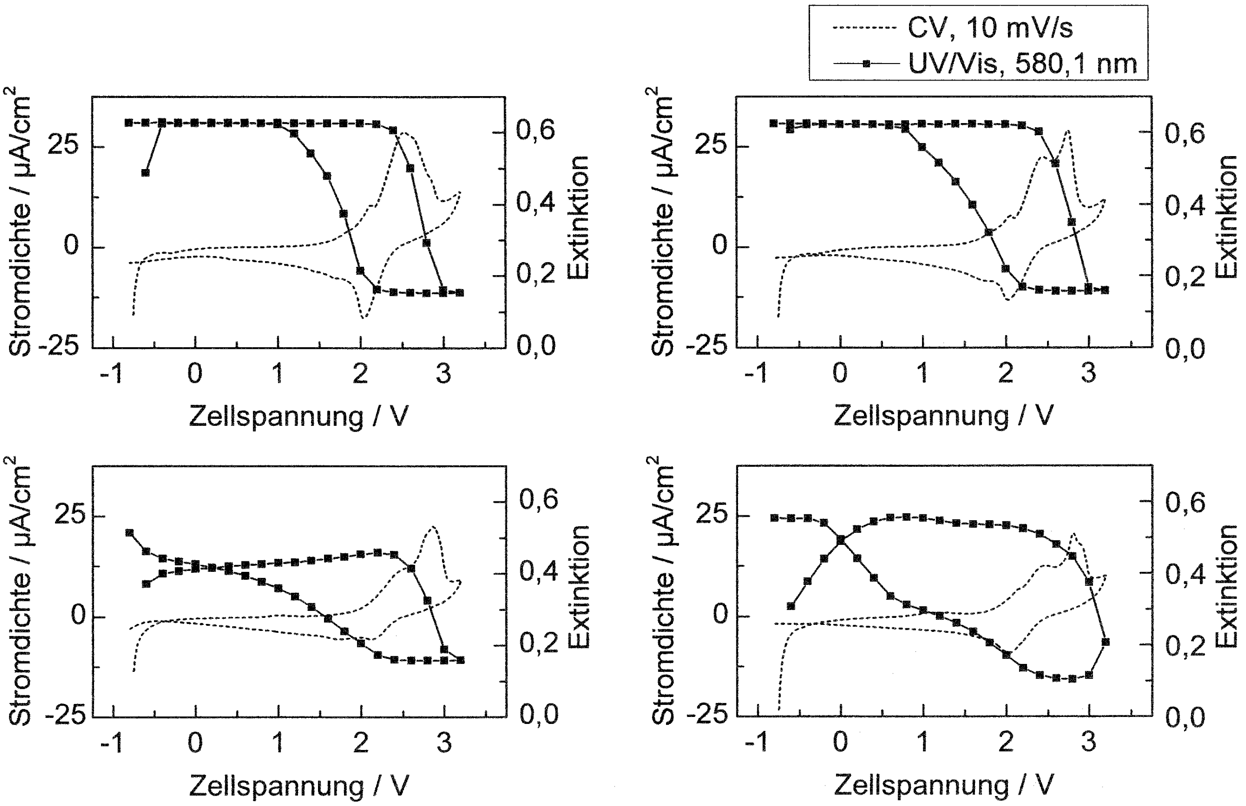
CV, 10 mV/s
UV/Vis, 580,1 nm
Stromdichte / µA/cm²
Extinktion
Zellspannung / V
25
0
-25
0,6
0,4
0,2
0,0
-1
0
1
2
3

Figur 11c

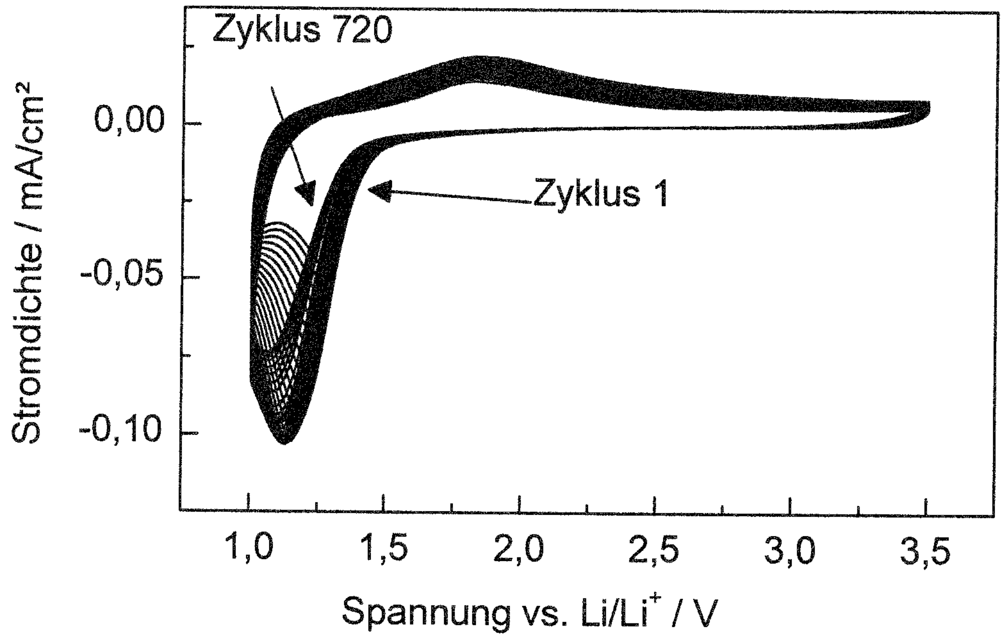


Figur 12a

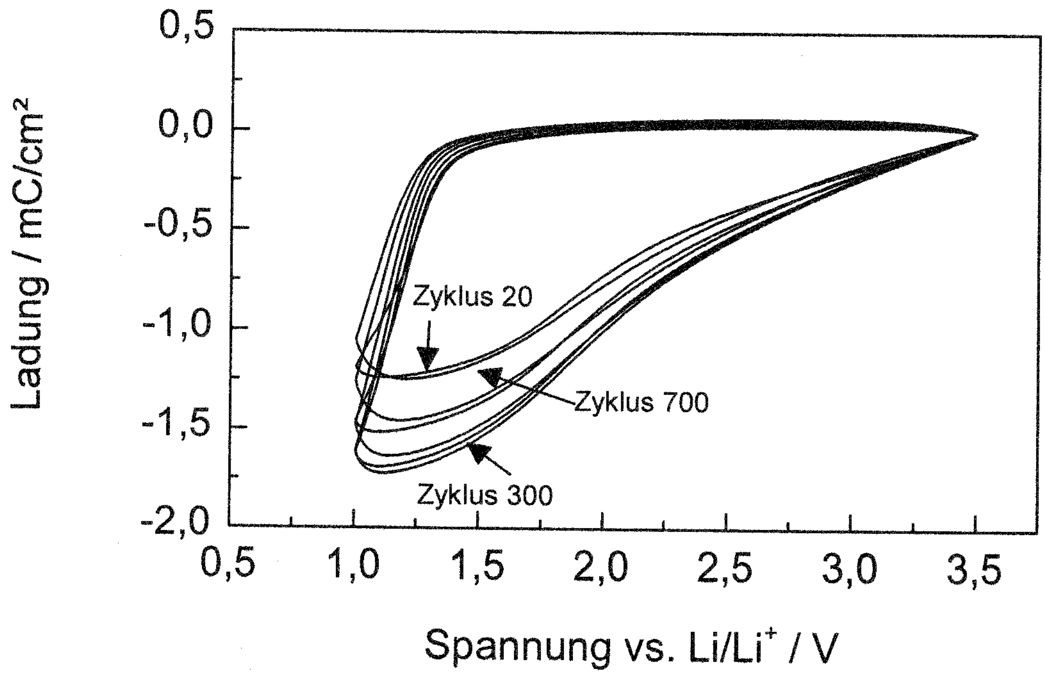


Figur 12b

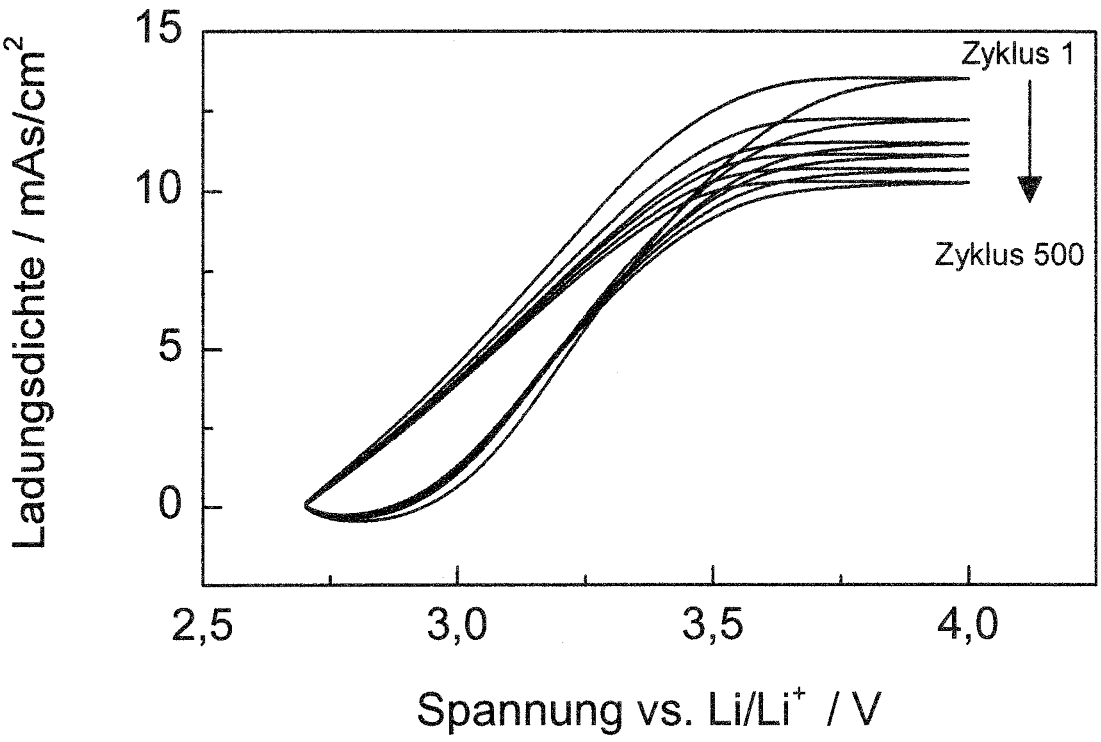


Figur 13a

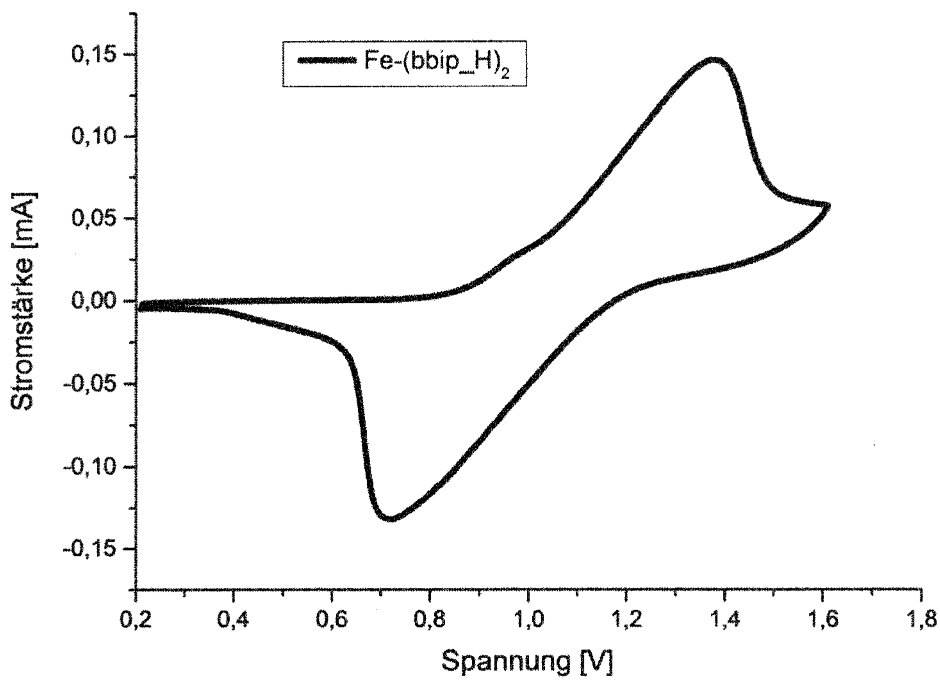


Figur 14a

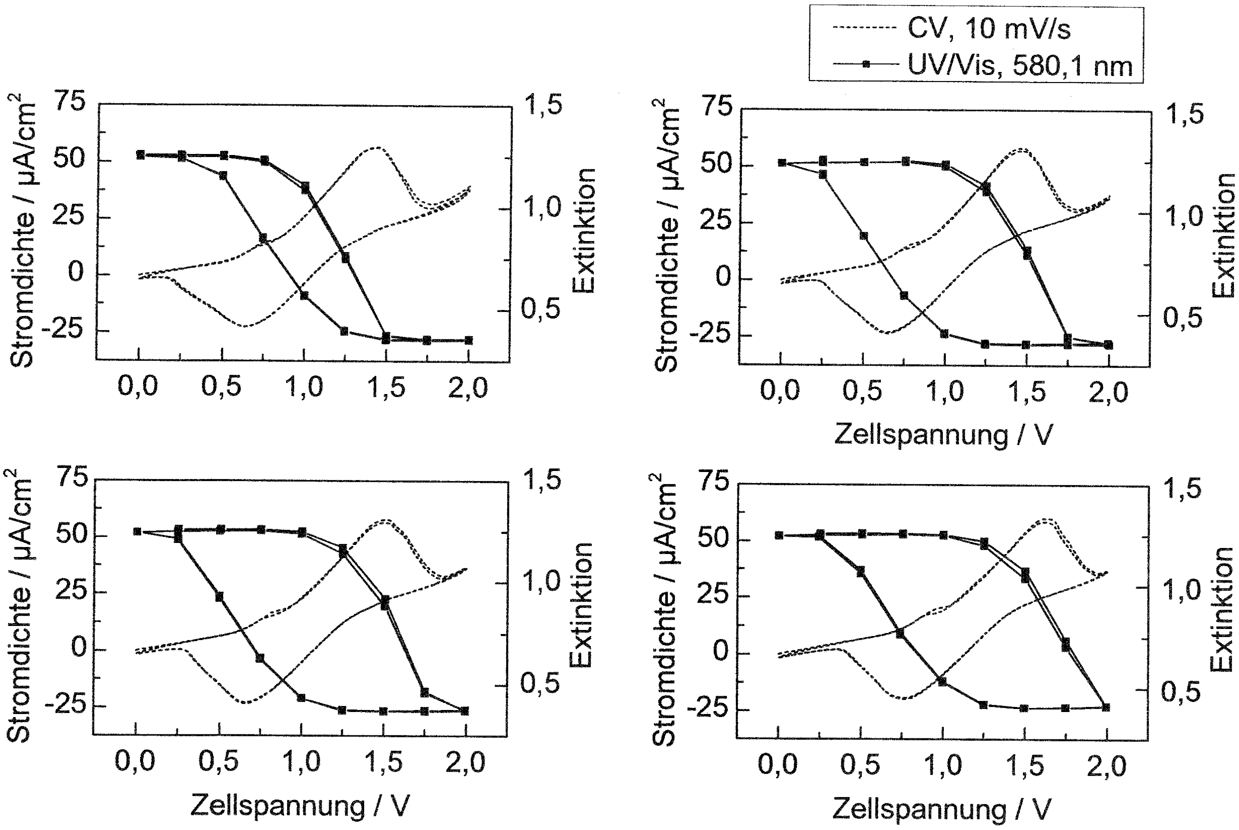


Figur 13b

nächste Seite: Figur 14

| | | |
|---|---|---|
| **bbip (X=H)** | 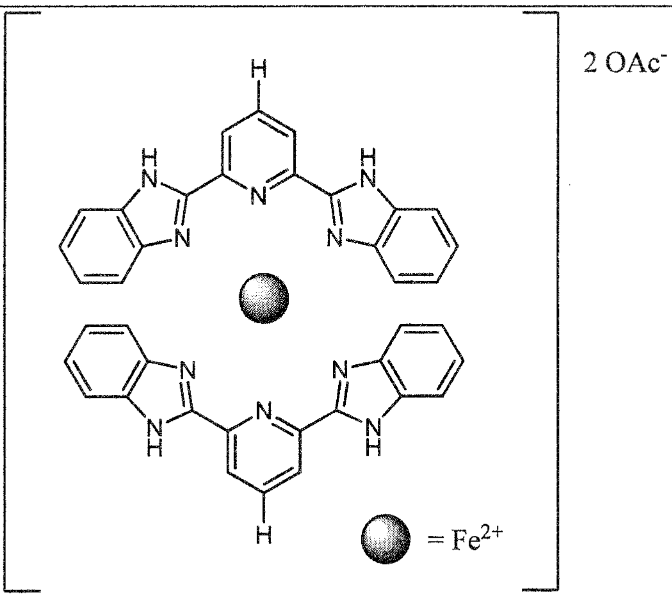 | **Voltammo-gramm siehe Fig.** 14a |
| **bbip (X=OH)** | 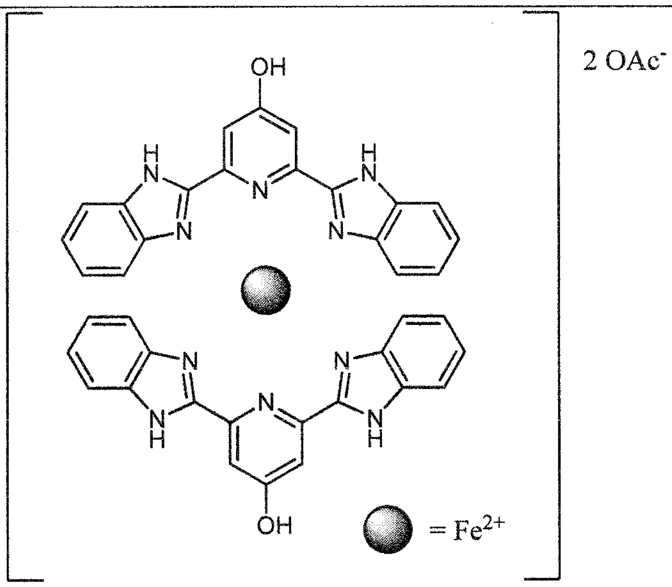 | **Voltammo-gramm siehe Fig.** 14b |
| **tpy-Cl** | 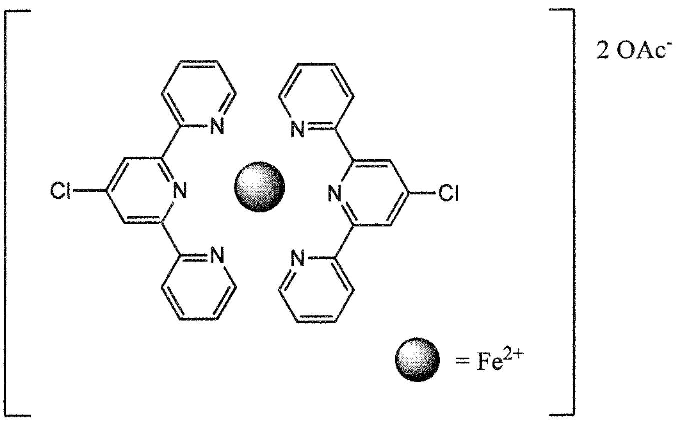 | **Voltammo-gramm siehe Fig.** 14c |

| | | |
|---|---|---|
| tpy-ph-$NH_2$ | 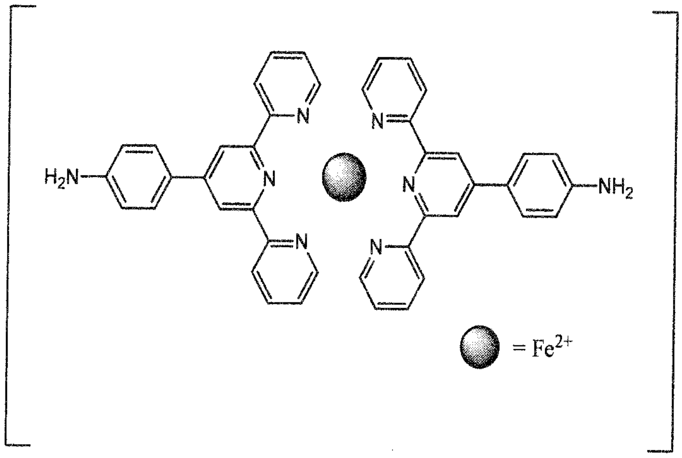 | Voltammogramm siehe Fig. 14d |

Fig. 14 (Fortsetzung)

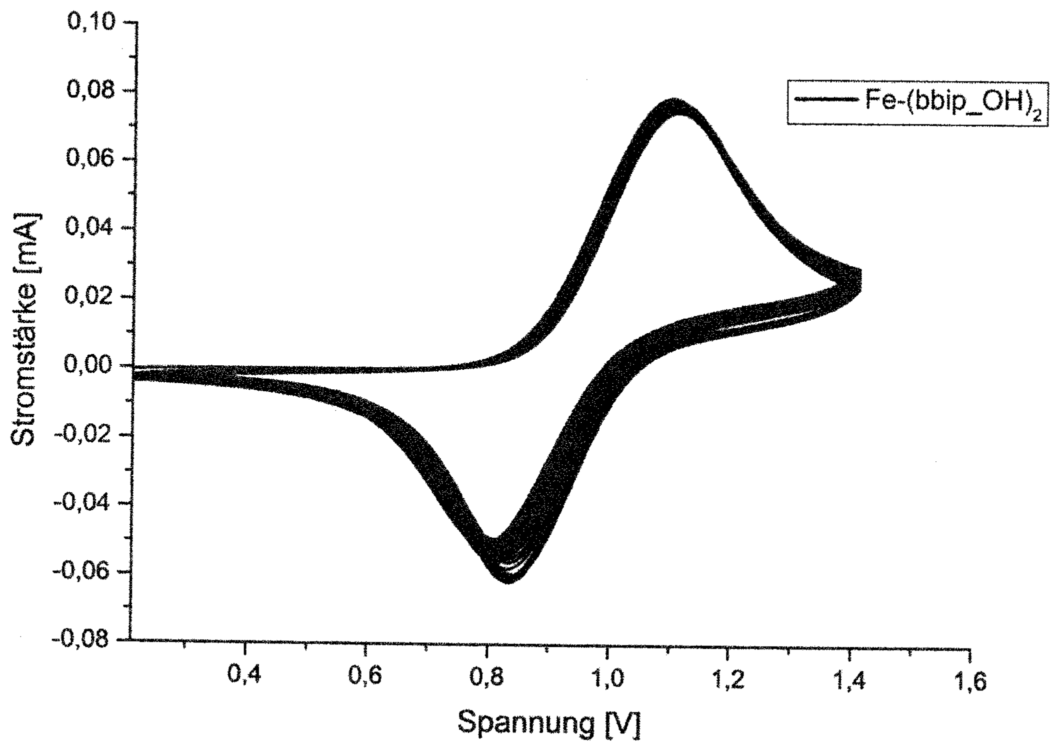


Fig. 14b

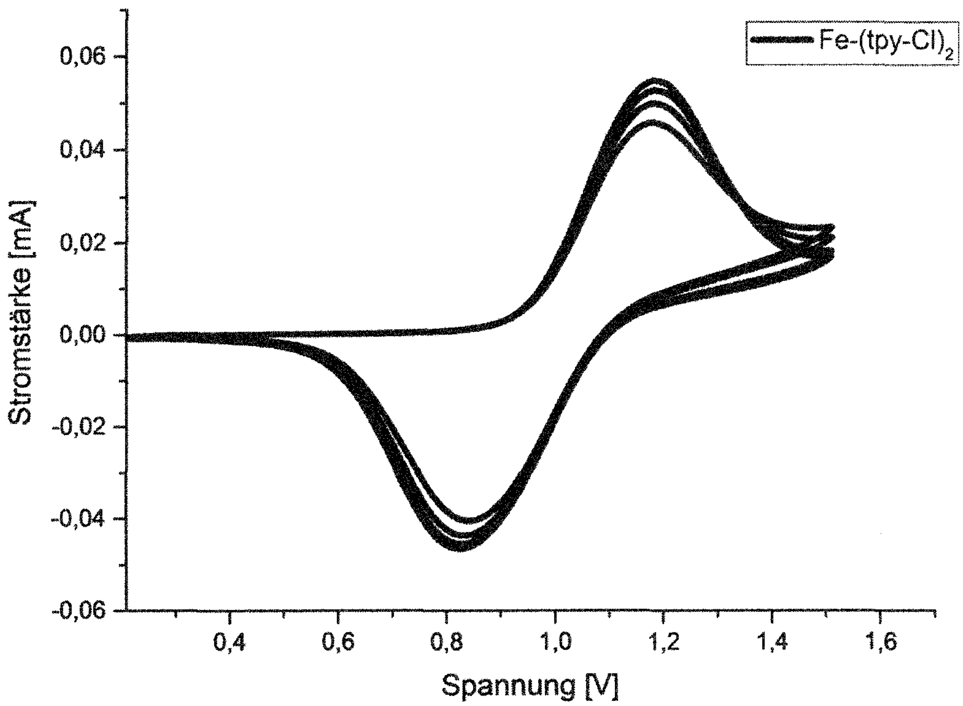


Fig. 14c

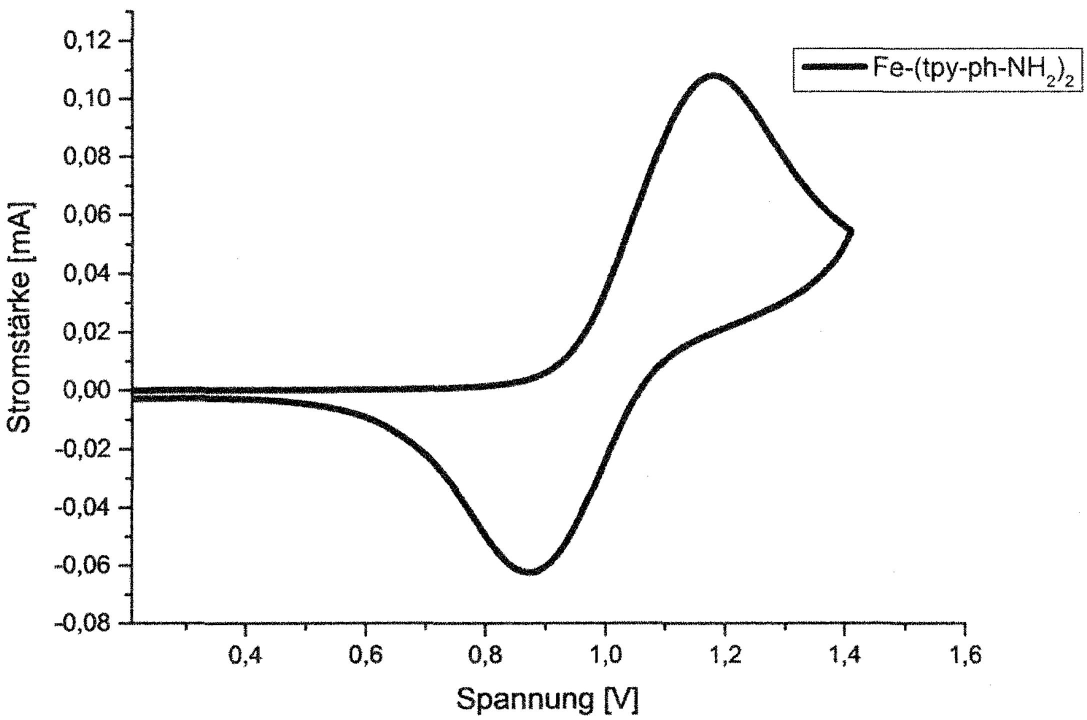


Fig. 14d

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2444839 A1
- EP 2105787 A
- US 2009270589 A1
- WO 2008081762 A1
- WO 2008143324 A1
- WO 2011096386 A1
- WO 2011096386 A
- US 20090270589 A


### In der Beschreibung aufgeführte Nicht-Patentliteratur


- **J.R. PLATT.** *J. Chem. Phys.,* 1961, vol. 34, 862
- **C. G. GRANQVIST.** *Nat. Mater.,* 2005, vol. 5, 89-90
- **S. HEUSING et al.** *Thin Solid Films,* 2006, vol. 502, 240-245
- **A. KRAFT et al.** *Solar Energy Materials and Solar Cells,* 2006, vol. 90, 469-476
- **R. BEATENS et al.** *Solar Energy Materials & Solar Cells,* 2010, vol. 94, 87-105
- **MORTIMER, R. J.** Electrochromic Materials. *Annu. Rev. Mater. Res.,* 2011, vol. 41, 241-268